(19) Europäisches Patentamt
European Patent Office
Office européen des brevets

(11) EP 1 919 115 A2

(12) EUROPEAN PATENT APPLICATION

(43) Date of publication:
07.05.2008 Bulletin 2008/19

(51) Int Cl.:
H04L 1/06 (2006.01)　　H04L 1/00 (2006.01)
H04L 25/03 (2006.01)　　H04L 27/26 (2006.01)

(21) Application number: 07021295.6

(22) Date of filing: 31.10.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(30) Priority: 31.10.2006　CN 200610143109
12.02.2007　CN 200710005572
11.06.2007　CN 200710108999

(71) Applicant: NTT DoCoMo Inc.
Chiyoda-ku
Tokyo 100-6150 (JP)

(72) Inventors:
• Liu, Jingxiu
Haidian District
Beijing 100080 (CN)
• She, Xiaoming
Haidian District
Beijing 100080 (CN)
• Chen, Lan
Haidian District
Beijing 100080 (CN)

(74) Representative: Stöckeler, Ferdinand et al
Schoppe, Zimmermann,
Stöckeler & Zinkler
Postfach 246
82043 Pullach bei München (DE)

(54) **Method, system, base station and user equipment for determining delay value of cyclic delay diversity**

(57) Methods, systems, BS and UE for determining Cyclic Delay Diversity delay value are disclosed. One method includes Step A1, obtaining an optimal CDD delay value in the precoding codebook for obtaining the best channel quality on each sub-band respectively based on a result of channel estimation and feeding back to the BS by the UE; Step A2, selecting an overall CDD delay value in the precoding codebook based on the local optimal CDD delay values received from each UE by the BS; Step A3, updating the CDD delay values in the precoding codebook based on the overall CDD delay value in the precoding codebook by the BS. The invention provides provide a method for determining the CDD delay value (group) in precoding system with CDD, and a relating system, a base station, and a user equipment, to realize adaptive update of the CDD delay value (group), thereby ensuring the system performance to the most extent.

```
                                                  201
┌────────────────────────────────────────────────┐
│ BS starts the update process of the CDD delay   │
│ values in the precoding codebook, or UE         │
│ automatically starts the update process of the  │
│ CDD delay values in the precoding codebook      │
│ periodically                                    │
└────────────────────────────────────────────────┘
                        │
                        ▼                     202
┌────────────────────────────────────────────────┐
│ UE obtains an optimal CDD delay value in the    │
│ precoding codebook for obtaining the best       │
│ channel quality on each sub-band respectively   │
│ based on a result of channel estimation and     │
│ feeds back to the BS                            │
└────────────────────────────────────────────────┘
                        │
                        ▼                     203
┌────────────────────────────────────────────────┐
│ BS selects an overall CDD delay value in the    │
│ precoding codebook based on the local optimal   │
│ CDD delay values received from each UE          │
└────────────────────────────────────────────────┘
                        │
                        ▼                     204
┌────────────────────────────────────────────────┐
│ BS updates the CDD delay values in the          │
│ precoding codebook based on the overall CDD     │
│ delay values in the precoding codebook and      │
│ notifies UE                                     │
└────────────────────────────────────────────────┘
                        │
                        ▼                     205
┌────────────────────────────────────────────────┐
│ System operates normally under the updated CDD  │
│ delay values in the precoding codebook          │
└────────────────────────────────────────────────┘
```

Fig. 2

EP 1 919 115 A2

**Description**

FIELD

The present disclosure relates to MIMO-OFDMA (Multiple input Multiple Output Orthogonal Frequency Division Multiple Access) systems, and more particularly to a method for determining CDD (Cyclic Delay Diversity) delay value (group) in precoding codebook in the case of performing scheduling for multiple users by using CDD precoding technique in the MIMO-OFDMA system, and also to a relating system, a base station and a user equipment.

BACKGROUND

With the wider application and continuous development of the MIMO-OFDMA system, the CDD-based precoding technique is introduced to improve the performance of system.

The precoding technique is an effective method to improve the performance of system, which pre-processes signals at the transmitting side so as to lower the complexity at the receiving side and improve the performance of system. Especially, when the system operates in a downlink SDMA (Space-Division Multiple Access) mode, a joint detection cannot be performed between different terminals, thereby limiting the transmission capability of system ( the joint detection is not required in a TD (Transmit Diversity) mode and a single-user SDM (Space Division Multiplexing) mode).

In the precoding technique, the terminals feed the channel information back to the base station (BS), and the BS will obtain an optimized precoding process by calculation. This precoding process may be linear, and also may be non-linear, wherein the non-linear is more complex. In the linear precoding system, it conducts a linear weighting calculation to different data streams at the transmitting side, which can be represented by an expression $Y_{Nr \times 1} = H_{Nr \times Nt} P_{Nt \times Ns} X_{Ns \times 1} + N_{Nr \times 1}$, wherein Nr represents the number of the receiving antennas, Nt represents the number of the transmitting antennas, Ns represents the number of data streams transmitted at the same time, Y represents the signal at the receiving side, H represents the channel matrix, P represents the precoding matrix, X represents data streams of a single user or different users at different Ns, and N represents the noise. In order to implement the optimized linear precoding, it requires the user to feed back the channel matrix H in real time. In the OFDM (Orthogonal Frequency Division Multiplexing) and OFDMA (Orthogonal Frequency Division Multiple Access) systems, it feeds back the channel matrix H on each subcarrier/ resource block, and thus requires a large uplink feedback channel width, which however is impractical for many actual systems even if there are many algorithms for reducing the uplink feedback cost. In such case, a codebook-based precoding system is proposed.

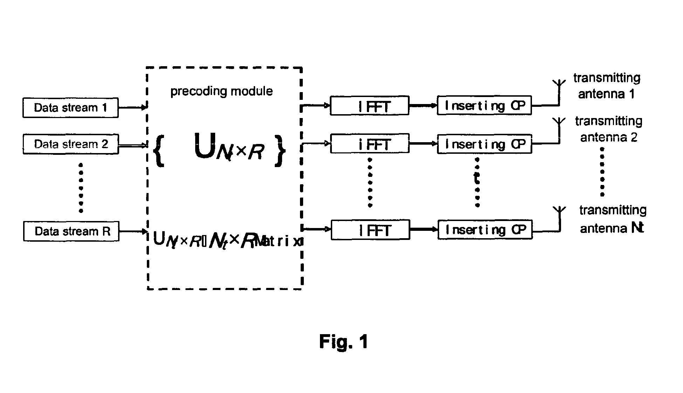

As shown in Fig. 1, in the codebook-based precoding MIMO-OFDM(A) system, there provides a pre-designed codebook at the BS side. This codebook includes a plurality of precoding matrixes, each of which includes several precoding vectors, wherein the matrixes and the vectors are previously designed according to different channels (such as statistical information of the channel) and different optimum rules (such as maximum capacity, minimum error rate). In Fig .1, the data streams as shown can be different ones from a single user or can be streams from different users, the precoding module performs precoding process on the scheduled data streams, the Inverse Fourier Transform module performs inverse Fourier transform (IFFT) on the data, and the cyclic prefix inserting module operates to insert the cyclic prefix (CP). In practice, the terminal does not need to feed back the channel coefficient to the BS in real time, but feeds back the index of the matrix or the vector in the codebook which are mostly matched with the real channel to the BS and feeds back a Channel Quality Indicator (CQI) corresponding to the matrix or the vector together to the BS; further, the BS, after receiving the feedback information from the terminal, can perform multi-user scheduling according to the CQI of the different user and the corresponding scheduling algorithm, and then directly uses the matrix or the vector feed by the scheduled user as the precoding coefficient of the transmitting side, but does not need to calculate again.

Since quantization of the channel coefficient requires several bits (e.g. 10 bits) to achieve a higher quantization precision, and in the MIMO system, all of the channels between different transmitting antennas and different receiving antennas are required to be quantized (the feedback cost on each carrier is $10 \times Nr \times Nt$), whereas in the codebook-based precoding system, only the matrix index and the vector index are required to be feed back (e.g. it requires only 2 bits for the index of 4 matrixes and 1 bit for two vectors of each matrix), the codebook-based precoding system can greatly reduce the feedback cost. From a view of performance, in the precoding based on codebook, since the precoding coefficient is selected from several coefficients calculated in advance, it cannot ensure the current coefficient is optimal at every time. Generally, the performance of the codebook-based precoding technique is a little worse than that of the optimal non-codebook-based precoding technique. However, such difference in performance can be reduced by increasing the number of precoding coefficients in the codebook, because the more the preceding coefficients in the codebook are, the larger the probability of the coefficient that can be chosen by the user and matched with the channel will be, and the better the performance of codebook-based precoding will be. Meanwhile, the increases of the number of the precoding coefficients in the codebook will result in an increase in the feedback cost, and therefore it is necessary to select an appropriate codebook according to the system requirements such as performance and feedback cost.

The above descriptions are basic principle of the precoding system. There are many conventional methods for designing the codebook of the precoding system, which will not be discussed in detail here.

The technique of precoding with CDD is to introduce CDD into the conventional precoding codebook, i.e., changing the formulation of the codebook into $P_{CDD-based\ precoding} = diag(e^{\frac{-j2\pi kd_1}{Nc}}, \cdots, e^{\frac{-j2\pi kd_{Nt}}{Nc}}) \times P_{conventional}$ ,

wherein $P_{CDD-based\ precoding}$ represents the codebook of the precoding system using CDD technique, diag() is a diagonal matrix, k is an index of subcarrier, $d_i$ represents a CDD delay value corresponding to the i transmitting antenna, Nc represents the number of the subcarriers, $P_{conventional}$ represents the codebook designed by a conventional precoding method. $P_{conventional}$ may represent codebooks designed by different optimum rules, and with combination of CDD, it may change the fluctuation property of the channel in frequency domain, so as to obtain a larger Multi-User Diversity Gain and/or frequency domain Diversity Gain. Moreover, $P_{conventional}$ may be an identity matrix, such that it will be equivalent to a simplex CDD system.

However, the conventional codebook design method does not provide a solution on how to design the CDD delay value (group). Therefore, it is desirable to solve the problem of determining the CDD delay value (group) in precoding system with CDD so as to improve the performance of system.

SUMMARY

Accordingly, it is an object of the present invention to provide a method, a relating system, a base station and a user equipment for determining the CDD delay value (group) in precoding system with CDD, to realize adaptive update of the CDD delay value (group), thereby ensuring the system performance to the most extent.

To achieve the above object, one aspect of the present invention provides a method for determining Cyclic Delay Diversity (CDD) delay value, applied in a CDD precoding system which includes a Base Station (BS) and a plurality of User Equipments (UEs), the method including Step A1, obtaining an optimal CDD delay value in the precoding codebook for obtaining the best channel quality on each sub-band respectively based on a result of channel estimation and feeding back to the BS by the UE; Step A2, selecting an overall CDD delay value in the precoding codebook based on the local optimal CDD delay values received from each UE by the BS; Step A3, updating the CDD delay values in the precoding codebook based on the overall CDD delay value in the precoding codebook by the BS.

The above method further includes prior to step A1, sending a start signal by the BS to the UE to start the update process of the CDD delay values in the precoding codebook, or automatically starting the update process of the CDD delay values in the precoding codebook by the UE periodically.

In the above method the step A1 further includes performing channel estimation by using pilot information sent from the BS by the UE; obtaining a CDD delay value in the precoding codebook for obtaining a largest capacity, or a highest data rate, or a smallest error rate on each sub-band based on the result of the channel estimation by the UE; and sending the local optimal CDD delay value to the BS by the UE.

In the above method, the step of obtaining an optimal CDD delay value in the precoding codebook for obtaining the best channel quality on each sub-band respectively by the UE, includes testing all possible CDD values in a predefined range of the CDD values on each sub-band to find the optimal CDD delay value in the precoding codebook for obtaining the best channel quality for the UE.

In the above method, the step of obtaining an optimal CDD delay value within the precoding codebook for obtaining the best channel quality on each sub-band respectively by the UE includes, calculating to obtain the optimal CDD delay value which corresponds to the best channel quality on each sub-band for the UE.

In the above method, the step A2 further includes receiving the local optimal CDD delay values from each UE and performing probability analysis on the local optimal CDD delay values by the BS; selecting Nt CDD delay values with highest probability as the overall CDD delay values of the precoding codebook by the BS, wherein Nt is the number of the transmitting antennas.

In the above method, the step A1 further includes obtaining an optimal CDD delay value in the precoding codebook for obtaining the best channel quality on each sub-band respectively based on a result of channel estimation and feeding the optimal CDD delay value with a corresponding channel quality back to the BS by the UE.

The step A2 further includes receiving the local optimal CDD delay value with the corresponding channel quality from each UE and performing probability analysis on the channel quality corresponded to the local optimal CDD delay values by the BS; selecting Nt CDD delay values with the highest probability as the overall CDD delay values in the precoding codebook by the BS.

A system for determining Cyclic Delay Diversity (CDD) delay value, includes a Base Station (BS) and a plurality of User Equipments (UEs), said BS including a CDD precoding codebook module for storing codebooks, each said UE including a baseband demodulation module having a channel estimation sub-module, wherein the UE further includes a local optimal CDD delay value acquiring module for acquiring the local optimal CDD delay value for obtaining best channel quality on each sub-band respectively, based on the channel estimation result from the channel estimation sub-module, and sending the local optimal CDD delay value to the BS; and the BS further includes a feedback information receiving module for receiving the local optimal CDD delay values in the precoding codebook from the UE, and a probability analysis module for performing probability analysis on the local optimal CDD delay values for each UE, selecting Nt CDD delay values with highest probability as an overall CDD delay value in the precoding codebook and sending that to the CDD precoding codebook module for updating the CDD delay values in the precoding codebook.

In the above system the local optimal CDD delay value acquiring module of the UE is further configured to acquire the local optimal CDD delay value for obtaining the best channel quality on each sub-band respectively, based on the channel estimation result from the channel estimation sub-module, and sending the local optimal CDD delay value together with a corresponding channel quality to the BS; the feedback information receiving module of the BS is further configured to receive the local optimal CDD delay values in the precoding codebook with the corresponding channel quality from the UE, and the probability analysis module of the BS is further configured to perform probability analysis on the channel quality corresponding to the local optimal CDD delay values for each UE, select Nt CDD delay values corresponding to the channel quality with the highest probability as an overall CDD delay value in the precoding codebook and sending that to the CDD precoding codebook module for updating the CDD delay values in the precoding codebook.

In the above system, the BS further includes an update-start signal transmitting module for sending a start signal of updating the CDD delay value to the UE; the UE further includes an update-start signal receiving module for receiving a start signal of updating the CDD delay value from the BS, and starting the local optimal CDD delay value acquiring module.

In the above system, the UE further includes a timing module for periodically generating and sending a start signal of updating the CDD delay value to the local optimal CDD delay value acquiring module.

A base station (BS), includes a CDD precoding codebook module for storing codebooks and further includes a feedback information receiving module for receiving the local optimal CDD delay values in the precoding codebook from the UE, and a probability analysis module for performing probability analysis on the local optimal CDD delay values for each UE, selecting Nt CDD delay values with highest probability as an overall CDD delay value in the precoding codebook and sending that to the CDD precoding codebook module for updating the CDD delay values in the precoding codebook.

In the above BS, the feedback information receiving module is further configured to receive the local optimal CDD delay values in the precoding codebook with the corresponding channel quality; the probability analysis module is further configured to perform a probability contribution analysis on the channel quality corresponding to the local optimal CDD delay value for each UE and select Nt CDD delay values corresponding to channel quality with the highest probability as an overall CDD delay value, and then send that to the CDD precoding codebook module to update the CDD delay values in the precoding codebook.

The above BS further includes an update-start signal transmitting module for sending a start signal of updating the CDD delay value to the UE.

A user equipment (UE) includes a baseband demodulation module having a channel estimation sub-module, and further includes a local optimal CDD delay value acquiring module for acquiring the local optimal CDD delay value for obtaining best channel quality on each sub-band respectively, based on the channel estimation result from the channel estimation sub-module, and sending the local optimal CDD delay value to the BS.

In the above UE, the local optimal CDD delay value acquiring module is further configured to acquire the local optimal CDD delay value for obtaining the best channel quality on each sub-band respectively, based on the channel estimation result from the channel estimation sub-module, and send the local optimal CDD delay value with a corresponding channel quality to the BS.

The above UE further includes an update-start signal receiving module for receiving start signal of updating the CDD delay value from the BS, and starting the local optimal CDD delay value acquiring module.

The above UE further includes a timing module for periodically generating and sending a start signal of updating the CDD delay value to the local optimal CDD delay value acquiring module.

A method for determining Cyclic Delay Diversity (CDD) delay value, applied in a CDD precoding system which includes a Base Station (BS) and a plurality of User Equipments (UEs), includes Step B1, determining channel feature based on a result of channel estimation and feeding the resulting channel feature information back to the BS by the UE; Step B2, selecting an overall CDD delay value in the precoding codebook based on the channel feature information received from each UE by the BS; Step B3, updating the CDD delay values in the precoding codebook based on the overall CDD delay value in the precoding codebook by the BS.

The above method further includes prior to step B1, sending a start signal by the BS to the UE to start the update process of the CDD delay values in the precoding codebook, or automatically starting the update process of the CDD delay values in the precoding codebook by the UE periodically.

In the above method, the step B2 further includes receiving the channel feature information from each UE and performing probability analysis on the channel feature information by the BS; selecting Nt CDD delay values matched with the channel feature having the highest probability as the overall CDD delay values of the precoding codebook by the BS.

In the above method, the step B2 further includes receiving the channel feature information from each UE and performing probability analysis on the CDD delay values matched with the channel feature information by the BS; selecting Nt CDD delay values having the highest probability as the overall CDD delay values in the precoding codebook by the BS.

In the above method, the channel feature information includes at least one from a group of LOS (Line of Sight) /NLOS (Non-Line of Sight), fast fading / slow fading, and flat fading / frequency-selective fading; and a rule of said matching includes a channel for LOS is suitable to use a larger CDD delay value in the precoding codebook; while a channel for NLOS is suitable to use a smaller CDD delay value in the precoding codebook; a channel for fast fading is suitable to use a larger CDD delay value in the precoding codebook; while a channel for slow fading is suitable to use a smaller CDD delay value in the precoding codebook; a channel for flat fading is suitable to use a larger CDD delay value in the precoding codebook; while a channel for frequency-selective fading is suitable to use a smaller CDD delay value in the precoding codebook.

A system for determining Cyclic Delay Diversity (CDD) delay value, includes a Base Station (BS) and a plurality of User Equipments (UEs), said BS including a CDD precoding codebook module for storing codebooks, each said UE including a baseband demodulation module having a channel estimation sub-module, wherein the UE further includes a channel feature determining module for determining the channel feature, based on the channel estimation result from the channel estimation sub-module, and send the resulting channel feature information to the BS; and the BS further includes a feedback information receiving module for receiving the channel feature information from the UE, and a probability analysis module for performing probability contribution analysis on the channel feature information for each UE, selecting Nt CDD delay values matched with the channel feature having the highest probability as an overall CDD delay value in the precoding codebook and send that to the CDD precoding codebook module to update the CDD delay values in the precoding codebook.

In the above system, the probability analysis module of the BS is further configured to perform probability contribution analysis on the CDD delay values matching with the channel feature information for each UE, select Nt CDD delay values having the highest probability as an overall CDD delay value in the precoding codebook and send that to CDD precoding codebook module to update the CDD delay values in the precoding codebook.

In the above system, the BS further includes an update-start signal transmitting module for sending a start signal of updating the CDD delay value to the UE; the UE further includes an update-start signal receiving module for receiving the start signal of updating the CDD delay value from the BS, and starting the channel feature determining module.

In the above system, the UE further includes a timing module for periodically generating and sending a start signal of updating the CDD delay value to the channel feature determining module.

A base station (BS), includes a CDD precoding codebook module for storing codebooks and further includes a feedback information receiving module for receiving the channel feature information from UEs, and a probability analysis module for performing probability contribution analysis on the channel feature information for each UE, selecting Nt CDD delay values matched with the channel feature having the highest probability as an overall CDD delay value in the precoding codebook and send that to the CDD precoding codebook module to update the CDD delay values in the precoding codebook.

In the above BS, the probability analysis module is further configured to perform probability contribution analysis on the CDD delay values matching with the channel feature information for each UE, select Nt CDD delay values having highest probability as an overall CDD delay value in the precoding codebook and send that to CDD precoding codebook module to update the CDD delay values in the precoding codebook.

The above BS further includes an update-start signal transmitting module for sending a start signal of updating the CDD delay value to the UE.

A user equipment (UE), includes a baseband demodulation module having a channel estimation sub-module, and further includes a channel feature determining module for determining the channel feature, based on the channel estimation result from the channel estimation sub-module, and send the resulting channel feature information to the BS.

The UE further includes an update-start signal receiving module for receiving start signal of updating the CDD delay value from the BS, and starting the channel feature determining module.

The UE further includes a timing module for periodically generating and sending a start signal of updating the CDD delay value to the channel feature determining module.

A method for determining Cyclic Delay Diversity (CDD) delay value, applied in a CDD precoding system which includes a Base Station (BS) and a plurality of User Equipments (UEs), includes Step C1, obtaining an optimal CDD delay value within the precoding codebook for obtaining the best channel quality on each sub-band respectively based on a result of channel estimation and feeding back to the BS by the UE; Step C2, selecting an optimal CDD delay value in the precoding codebook for each UE by the BS, based on the local optimal CDD delay values received from each UE; Step C3, updating the CDD delay values in the precoding codebook based on the selected CDD delay values of the precoding codebook by the BS.

The above method further includes prior to step C1, sending a start signal by the BS to the UE to start the update process of the CDD delay values in the precoding codebook, or automatically starting the update process of the CDD delay values in the precoding codebook by the UE periodically.

In the above method, the step C1 further includes performing channel estimation by using pilot information sent from the BS by the UE; obtaining a CDD delay value in the precoding codebook for obtaining a largest capacity, or a highest data rate, or a smallest error rate on each sub-band based on the result of the channel estimation by the UE; sending the obtained local optimal CDD delay value to the BS by the UE.

In the above method, the step of obtaining an optimal CDD delay value within the precoding codebook for obtaining the best channel quality on each sub-band respectively by the UE includes testing all possible CDD values in a predefined range of the CDD values on each sub-band to find the optimal CDD delay value within the precoding codebook for obtaining the best channel quality for the UE.

In the above method, the step of obtaining an optimal CDD delay value within the precoding codebook for obtaining the best channel quality on each sub-band respectively by the UE includes calculating to obtain the optimal CDD delay value which corresponds to the best channel quality on each sub-band for the UE.

In the above method, the step C2 further includes receiving the local optimal CDD delay values from each UE and performing probability analysis on the local optimal CDD delay values for each UE by the BS; selecting Nt CDD delay values with the highest probability as the optimal CDD delay values in the precoding codebook for the respective UEs by the BS.

In the above method, the step C1 further includes obtaining an optimal CDD delay value within the precoding codebook for obtaining the best channel quality on each sub-band respectively based on a result of channel estimation and feeding the optimal CDD delay value together with a corresponding channel quality back to the BS by the UE.

The step C2 further includes receiving the local optimal CDD delay value together with the corresponding channel quality from each UE and performing probability analysis on the channel quality corresponding to the optimal CDD delay values by the BS; selecting Nt CDD delay values corresponding to the channel quality having highest probability as the optimal CDD delay values in the precoding codebook for the UE by the BS.

A system for determining Cyclic Delay Diversity (CDD) delay value, includes a Base Station (BS) and a plurality of User Equipments (UEs), said BS including a CDD precoding codebook module for storing codebooks, each said UE including a baseband demodulation module having a channel estimation sub-module, wherein the UE further includes a iocai optimal CDD delay value acquiring module for acquiring the local optimal CDD delay value for obtaining the best channel quality on each sub-band respectively, based on the channel estimation result from the channel estimation sub-module, and sending the local optimal CDD delay value to the BS; and the BS further includes a feedback information receiving module for receiving the local optimal CDD delay values in the precoding codebook from the UE, and a probability analysis module for performing probability analysis on the local optimal CDD delay values for each UE, selecting Nt CDD delay values with the highest probability as an overall CDD delay value in the precoding codebook and sending that to the CDD precoding codebook module for updating the CDD delay values in the precoding codebook.

In the above system, the local optimal CDD delay value acquiring module of the UE is further configured to acquire the local optimal CDD delay value for obtaining the best channel quality on each sub-band respectively, based on the channel estimation result from the channel estimation sub-module, and sending the local optimal CDD delay value with a corresponding channel quality to the BS; the feedback information receiving module of the BS is further configured to receive the local optimal CDD delay values of the precoding codebook together with the corresponding channel quality from the UE, and the probability analysis module of the BS is further configured to perform probability analysis on the channel quality corresponding to the local optimal CDD delay values for each UE, select Nt CDD delay values corresponding to the channel quality having the highest probability as an overall CDD delay value in the precoding codebook for each UE and sending that to the CDD precoding codebook module for updating the CDD delay values in the precoding codebook.

In the above system, the BS further includes an update-start signal transmitting module for sending a start signal of updating the CDD delay value to the UE; the UE further includes an update-start signal receiving module for receiving the start signal of updating the CDD delay value from the BS, and starting the local optimal CDD delay value acquiring module.

In the above system, the UE further includes a timing module for periodically generating and sending a start signal of updating the CDD delay value to the local optimal CDD delay value acquiring module.

A base station (BS), includes a CDD precoding codebook module for storing codebooks and further includes a feedback information receiving module for receiving the local optimal CDD delay values in the precoding codebook from respective UEs, and a probability analysis module for performing probability analysis on the local optimal CDD delay values for each UE, selecting Nt CDD delay values with the highest probability as optimal CDD delay values in the precoding codebook for the respective UEs and sending that to the CDD precoding codebook module for updating the CDD delay values in the precoding codebook.

In the above BS, the feedback information receiving module is further configured to receive the local optimal CDD delay values in the precoding codebook together with a corresponding channel quality; the probability analysis module is further configured to perform a probability contribution analysis on the channel quality corresponded to the local optimal CDD delay value for each UE and select Nt CDD delay values corresponding to the channel quality with the highest probability as the optimal CDD delay values for the respective UEs, and then send that to the CDD precoding codebook module to update the CDD delay values in the precoding codebook.

The BS further includes an update-start signal transmitting module for sending a start signal of updating the CDD delay value to the UE.

A method for determining Cyclic Delay Diversity (CDD) delay value, applied in a CDD precoding system which includes a Base Station (BS) and a plurality of User Equipments (UEs), includes Step D1, determining channel feature based on a result of channel estimation and feeding the resulting channel feature information back to the BS by the UE; Step D2, selecting optimal CDD delay values in the precoding codebook for each UE by the BS, based on the channel feature information received from each UE; Step D3, updating the CDD delay values in the precoding codebook based on the selected CDD delay values of the precoding codebook by the BS.

The above method further includes prior to step D1, sending a start signal by the BS to the UE to start the update process of the CDD delay values in the precoding codebook, or automatically starting the update process of the CDD delay values in the precoding codebook by the UE periodically.

In the above method, the step D2 further includes receiving the channel feature information from each UE and performing probability analysis on the channel feature information by the BS; selecting Nt CDD delay values matched with the channel feature having highest probability as optimal CDD delay values in the precoding codebook by the BS.

In the above method, the step D2 further includes receiving the channel feature information from respective UEs and performing probability analysis on the CDD delay values matched with the channel feature information for each UE by the BS; selecting Nt CDD delay values having the highest probability as the optimal CDD delay values in the precoding codebook for the respective UEs by the BS.

In the above method, the channel feature information includes at least one from a group of LOS (Line of Sight) /NLOS (Non-Line of Sight), fast fading / slow fading, and flat fading / frequency-selective fading; and a rule of said matching includes a channel for LOS is suitable to use a larger CDD delay value in the precoding codebook; while a channel for NLOS is suitable to use a smaller CDD delay value in the precoding codebook; a channel for fast fading is suitable to use a larger CDD delay value in the precoding codebook; while a channel for slow fading is suitable to use a smaller CDD delay value in the precoding codebook; a channel for flat fading is suitable to use a larger CDD delay value in the precoding codebook; while a channel for frequency-selective fading is suitable to use a smaller CDD delay value in the precoding codebook.

A system for determining Cyclic Delay Diversity (CDD) delay value, includes a Base Station (BS) and a plurality of User Equipments (UEs), said BS including a CDD precoding codebook module for storing codebooks, each said UE including a baseband demodulation module having a channel estimation sub-module, wherein the UE further includes a channel feature determining module for determining the channel feature, based on the channel estimation result from the channel estimation sub-module, and send the result channel feature information to the BS; and the BS further includes a feedback information receiving module for receiving the channel feature information from the respective UEs, and a probability analysis module for performing probability contribution analysis on the channel feature information for each UE, selecting Nt CDD delay values matched with the channel feature having the highest probability as optimal CDD delay value in the precoding codebook for each UE and sending that to the CDD precoding codebook module to update the CDD delay values in the precoding codebook.

In the above system, the probability analysis module of the BS is further configured to perform probability contribution analysis on the CDD delay values matching with the channel feature information for each UE, select Nt CDD delay values having the highest probability as optimal CDD delay values in the precoding codebook for each UE and send that to CDD precoding codebook module to update the CDD delay values in the precoding codebook.

In the above system, the BS further includes an update-start signal transmitting module for sending a start signal of updating the CDD delay value to the UE; the UE further includes an update-start signal receiving module for receiving the start signal of updating the CDD delay value from the BS, and starting the channel feature determining module.

In the above system, the UE further includes a timing module for periodically generating and sending a start signal of updating the CDD delay value to the channel feature determining module.

A base station (BS), includes a CDD precoding codebook module for storing codebooks and further includes a feedback information receiving module for receiving the channel feature information from the respective UEs, and a probability analysis module for performing probability contribution analysis on the channel feature information for each UE, selecting Nt CDD delay values matched with the channel feature having the highest probability as optimal CDD delay values of the precoding codebook and sending that to CDD precoding codebook module to update the CDD delay values in the precoding codebook.

In the above BS, the probability analysis module is further configured to perform probability contribution analysis on the CDD delay values matching with the channel feature information for each UE, select Nt CDD delay values having the highest probability as optimal CDD delay values in the precoding codebook and send that to CDD precoding codebook module to update the CDD delay values in the precoding codebook.

The BS further includes an update-start signal transmitting module for sending a start signal of updating the CDD delay value to the respective UEs.

A method for determining Cyclic Delay Diversity (CDD) delay value, applied in a CDD precoding system which includes a Base Station (BS) and a plurality of User Equipments (UEs), includes Step E1, counting cell performance statistically and periodically by the BS; Step E2, recording the cell performance and corresponding CDD delay values by the BS during each counting period; Step E3, determining whether the cell performance declines or not by the BS, based on the recorded cell performance during several periods, and updating the CDD delay values in the precoding codebook if it is determined the cell performance declines.

In the above method, the cell performance includes at least one from a group including an average throughput, an average error rate, an average delay, and a boundary user throughput.

In the above method, updating the CDD delay values in step E3 includes using the unused CDD delay values based on the recorded information and updating the CDD delay values.

In the above method, updating the CDD delay values in step E3 includes using the CDD delay values with higher performance in the past time and updating the CDD delay values.

A base station (BS), includes a CDD precoding codebook module for storing codebooks and further including a CDD delay value updating module, a statistical result storing module, and a cell performance counting module, wherein the cell performance counting module counts periodically and stores the cell performance with the corresponding CDD delay values into the statistical result storing module, and the CDD delay value updating module updates the CDD delay values in the precoding codebook by using the result stored in the statistical result storing module.

In the above BS, the CDD delay value updating module is further configured to select the unused CDD delay values based on the recorded information to update the CDD delay values.

In the above BS, the CDD delay value updating module is further configured to select the CDD delay values with higher performance in the past time based on the recorded information to update the CDD delay values.

A method for determining Cyclic Delay Diversity (CDD) delay value, applied in a CDD precoding system which includes a Base Station (BS) and a plurality of User Equipments (UEs), includes Step F1, counting UE performance statistically and periodically by the BS; Step F2, recording the UE performance and corresponding CDD delay values by the BS during each counting period; Step F3, determining whether the UE performance declines by the BS, based on the recorded UE performance during several periods, and updating the CDD delay values in the precoding codebook if it is determined the UE performance declines.

In the above method, the UE performance includes at least one from a group including an average throughput, an average error rate, and an average delay.

In the above method, updating the CDD delay values in step F3 includes using the unused CDD delay values based on the recorded information and updating the CDD delay values.

In the above method, updating the CDD delay values in step F3 includes using the CDD delay values with higher performance in the past time and updating the CDD delay values.

A base station (BS), includes a CDD precoding codebook module for storing codebooks and further includes a CDD delay value updating module, a statistical result storing module, and a UE performance counting module, wherein the UE performance counting module counts the UE performance periodically and stores the UE performance with the corresponding CDD delay values into the statistical result storing module, and the CDD delay value updating module updates the CDD delay values in the precoding codebook by using the result stored in the statistical result storing module.

In the above BS, the CDD delay value updating module is further configured to select the unused CDD delay values based on the recorded information to update the CDD delay values.

In the above BS, the CDD delay value updating module is further configured to select the CDD delay values with higher performance in the past time based on the recorded information to update the CDD delay values.

The objects, technical solutions and advantageous effects of the present invention will be further described in connection with the embodiments by reference to the accompany drawings.

DRAWINGS

Fig. 1 is a schematic view of structure of a transmitting side of the conventional precoding system;

Fig. 2 is a flowchart showing the operation of a system corresponding to a first embodiment of the present invention;

Fig. 3 is a schematic diagram showing a system architecture according to the first embodiment of the present invention;

Fig. 4 is a schematic diagram showing another system architecture according to the first embodiment of the present invention;

Fig. 5 is a flowchart showing the operation of a system corresponding to a second embodiment of the present invention;

Fig. 6 is a schematic diagram showing a system architecture according to the second embodiment of the present invention;

Fig. 7 is a schematic diagram showing another system architecture according to the second embodiment of the present invention;

Fig. 8 is a flowchart showing the operation of a system corresponding to a third embodiment of the present invention;

Fig. 9 is a flowchart showing the operation of a system corresponding to a fourth embodiment of the present invention;

Fig. 10 is a flowchart showing the operation of a system corresponding to a fifth embodiment of the present invention;

Fig. 11 is a schematic diagram showing the structure of a transmitting side of the fifth embodiment of the present invention;

Fig. 12 is a flowchart showing the operation of a system corresponding to a sixth embodiment of the present invention;

Fig. 13 is a schematic diagram showing the structure of a transmitting side of the sixth embodiment of the present invention.

DETAILED DESCRIPTION

Embodiment 1

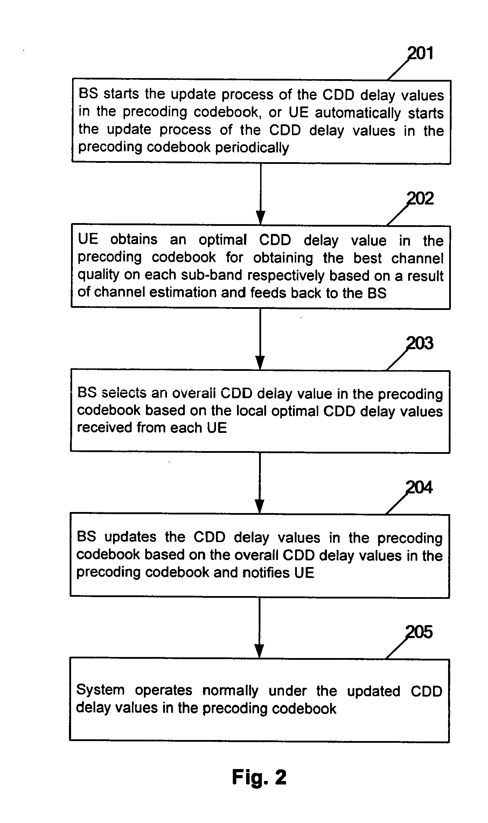

According to the present embodiment, a receiving side, i.e. the user equipment (UE), obtains CDD delay value (group) in its optimal precoding codebook, and feeds it back to the BS; and a transmitting side, i.e. the BS, according to the CDD delay values (groups) collected from every UE, selects an overall CDD delay value (group) in the precoding codebook to realize adaptive update of the CDD delay value (group) in the precoding codebook, so as to ensure the system performance to the most extent. Here, "overall" means that the CDD delay value(s) (groups) in the same group of precoding codebooks are suitable for all of the users. For simple description, the CDD delay value and the CDD delay value group are both referred to as "CDD delay value". Referring to Fig. 2, in the multi-user scheduling MIMO-OFDMA system, including a BS and several UEs and using precoding technique with CDD, the method according to the present embodiment includes the following steps.

In step 201, the BS sends a start signal to the UE, to start the update process of CDD delay value in the precoding codebook, or the UE may periodically automatically start the update process of CDD delay value in the precoding codebook.

In step 202, during each feedback period, the UE performs channel estimation by using the pilot information sent by the BS, and based on the result of channel estimation, obtains an optimal CDD delay value in the precoding codebook at each sub-band respectively, by which an optimal channel quality can be attained, and further feeds the local optimal CDD delay values in the precoding codebook to the BS, or feed the local optimal CDD delay values in the precoding codebook together with the corresponding channel qualities to the BS.

In step 203, the BS, by using the local optimal CDD delay values in the precoding codebook or the local optimal CDD delay values in the precoding codebook together with corresponding channel qualities collected from respective UE during the feedback periods in the update process, selects an overall CDD delay value in the precoding codebook.

In step 204, based on the selected overall CDD delay value, the BS updates the CDD delay values in the precoding codebook, and notifies the respective UE.

In step 205, the system operates normally under the updated CDD delay values of the precoding codebook.

While the BS does not initiate starting update of the CDD delay values once again or the timing period for the UE to periodically automatically start update of CDD delay values does not come, the UE is not necessary to update the CDD delay values, and the BS is not necessary to select the overall CDD delay value.

In the above process, the step 202 that the UE performs channel estimation by using the pilot information sent by the BS, and based on the result of channel estimation, obtains an optimal CDD delay value in the precoding codebook at each sub-band respectively, by which an optimal channel quality can be attained, may be accomplished by the following two methods respectively.

Method 1: By exhaustive search, on each sub-band, test to search possible CDD delay values in the precoding codebook one by one within the possible range of the CDD delay values, and the resulting CDD delay value which makes the channel quality (such as capacity, data rate, and error rate) of the user best is the optimal CDD delay value on the respective sub-band. The range of the CDD delay value is [0, Nc-1], wherein Nc is the total number of the subcarriers. Since it is a cyclical shifting operation, there exists periodicity, and therefore the range of the CDD delay value can also be expressed by [-Nc/2, Nc/2-1]. In a multi-user system, generally the value selected as the optimal CDD delay value is in close proximity to 0, i.e. its absolute value is small, and therefore the range of the CDD delay value can be expressed by [-Nc/2, Nc/2-1], so as to narrow the searching range to reduce the complexity.

Method 2: the optimal CDD delay value in the precoding codebook that makes the channel quality of the user best is obtained by calculation. The following will explain how to get the optimal CDD delay value by calculation, taking capacity as an example.

The capacity acquired by the UE on each sub-band by calculating a capacity expression, can be expressed as follows:

$$C_M(d_1, \cdots, d_{Nt}) = f(H, U, d_1, \cdots, d_{Nt})$$ ,

wherein $C_M$ represents the capacity on the $M^{th}$ sub-band, H represents a channel response from the transmitting antenna to the receiving antenna obtained by channel estimation, $d_i$ represents the CDD delay value in the precoding codebook corresponding to the $i^{th}$ transmitting antenna, and Nt represents the number of transmitting antennas. In a precoding codebook with CDD, the codebook $P = diag(e^{\frac{-j2\pi kd_1}{Nc}}, \cdots, e^{\frac{-j2\pi kd_{Nt}}{Nc}})U$ , wherein Nc represents the number of all subcarriers, the diagonal matrix is the codebook part of CDD in the precoding codebook, U is the codebook part designed by conventional method in the precoding, and U has different expression format in different operation mode (such as single-user Diversity mode, single-user space multiplexing mode, and multi-user space multiplexing mode). It can obtain an optimal CDD delay value in the precoding codebook by optimizing $C_M$, for example using Lagrange Algorithm.

By any one of the two methods above, the UE may obtain an optimal CDD delay value of precoding codebook which makes the channel quality of the user best on each sub-band respectively. Then, the UE will feed the local optimal CDD delay values in the precoding codebook or these local optimal CDD delay values in the precoding codebook together with corresponding channel qualities to the BS.

In the present embodiment, the step that the BS, by using the local optimal CDD delay values in the precoding codebook or the local optimal CDD delay values in the precoding codebook together with corresponding channel qualities collected from every UE, selects an overall CDD delay value in the precoding codebook, may adopt many methods to measure and select. The following will give out two methods as example.

Method 1: Using the local optimal CDD delay values in the precoding codebook feedback by the UE in different feedback period but in the same update process, the overall CDD delay value will be selected based on probability density distribution of the aforesaid CDD delay values.

Assuming {d($i_{UE}$, $i_{SB}$, $i_{Interval}$), $i_{UE}$=1, ...,$N_{UE}$, $i_{SB}$=1, ...,$N_{SB}$, $i_{Interval}$=1, ...,$N_{Interval}$} is a set of the CDD delay values in the precoding codebook feedback by the UE in different feedback period but in the same update process, wherein $i_{UE}$ represents the index of the UE, $i_{SB}$ represents the index of the sub-band, $i_{Interval}$ represents the index of time domain feedback period, $N_{UE}$ represents the number of users participating in feedback, $N_{SB}$ represents the number of the sub-bands, $N_{Interval}$ represents the number of feedback periods in one update process. Based on the above set, the BS renders a probability density distribution function of {d($i_{UE}$, $i_{SB}$, $i_{Interval}$), $i_{UE}$=1, ...,$N_{UE}$, $i_{SB}$=1, ...,$N_{SB}$, $i_{Interval}$=1, ..., $N_{Interval}$}, and uses Nt (the number of the transmitting antennas) CDD delay values with highest probability as the overall CDD delay values of the precoding codebook. As such, the resulting CDD delay value has a highest probability of being selected as the optimal CDD delay value by different users, so as to provide a gain of performance and ensure the system performance.

Method 2: Using the local optimal CDD delay values in the precoding codebook together with the corresponding channel qualities feedback by the UE in different feedback period but in the same update process, the overall CDD delay value will be selected based on the probability density distribution of the channel qualities.

When using this method, the UE, while feeding back the optimal CDD delay values to the BS, will feed back the corresponding channel qualities to the respective CDD delay value. Here, assuming $\{d(i_{UE}, i_{SB}, i_{Interval}), i_{UE}=1, ..., N_{UE}, i_{SB}=1, ...,N_{SB}, i_{Interval}=1, ...,N_{Interval}\}$ is a set of the local optimal CDD delay values feedback by UE, $\{C(i_{UE}, i_{SB}, i_{Interval}), i_{UE}=1, ...,N_{UE}, i_{SB}=1, ...,N_{SB}, i_{Interval}=1, ...,N_{Interval}\}$ is a CQI feedback by UE corresponding to $\{d(i_{UE}, i_{SB}, i_{Interval}), i_{UE}=1, ...,N_{UE}, i_{SB}=1, ...,N_{SB}, i_{Interval}=1, ...,N_{Interval}\}$. Based on the above two sets, the BS will first calculate $C(d_i)$,

$$C(d_i) = \sum_{d=d_i} C(i_{UE}, i_{SB}, i_{Interval})\,,$$ which indicates a sum of CQI corresponding to the CDD delay value of $d_i$ in the

precoding codebook, then plots a function of the probability distribution of $\{C(d_i)\}$, and then makes the Nt (the number of transmitting antennas) CDD delay values with highest $C(d_i)$ as the overall CDD delay value in the precoding codebook. As such, the resulting overall CDD delay value in the precoding codebook is able to provide a larger CQI with a higher probability for the system, so as to provide a gain of performance and ensure the system performance.

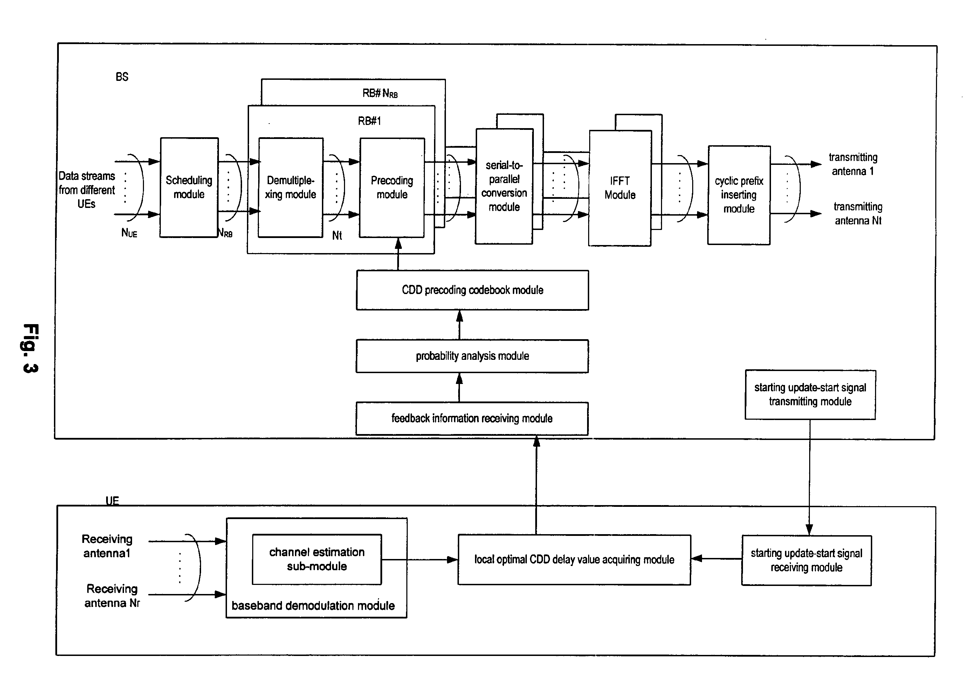

Referring to Fig. 3, the system in which the BS initiates update of the CDD delay values in the precoding codebook according to the embodiment of the present invention includes the BS, and a plurality of UEs (only one UE with detailed structure is shown in Fig. 3, and the others are similar and are not described in detail herein).

The receiving side, i.e. the UE, each includes receiving antennas, a baseband demodulation module having a channel estimation sub-module, a local optimal CDD delay value acquiring module, and an update-start signal receiving module.

The receiving antennas are configured to receive signals from the BS.

The channel estimation sub-module is used to perform channel estimation based on the pilot information sent by the BS.

The update-start signal receiving module is used to receive start signal of updating the CDD delay value from the BS, and start the local optimal CDD delay value acquiring module.

The local optimal CDD delay value acquiring module is configured to acquire the local optimal CDD delay value for obtaining the best channel quality on each sub-band respectively, based on the channel estimation result from the channel estimation sub-module, upon receiving the start signal, and send the local optimal CDD delay value or the local optimal CDD delay value together with corresponding channel quality to the BS.

The transmitting side, i.e. the BS, includes a scheduling module, a demultiplexing module, a precoding module, a serial-to-parallel conversion module, an inverse Fourier transform (IFFT) module, a cyclic prefix inserting module, transmitting antennas, a CDD precoding codebook module, a update-start signal transmitting module, a feedback information receiving module, and a probability analysis module.

The scheduling module is configured to schedule wireless resources for multiple users based on the feedback information (such as CQI) from the users, and allocate resources such as time, frequency, space and code for the users.

The demultiplexing module is used to send data streams to different antenna branches.

The precoding module is used to perform precoding process on the data streams, i.e. perform weighting process on the data characters of the different antenna branches.

The serial-to-parallel conversion module is used to convert the serial data streams into parallel data streams.

The IFFT module is used to perform inverse Fourier transform on the parallel data streams, so as to transform the signals from frequency domain into time domain.

The cyclic prefix inserting module is used to insert a cyclic prefix into the data processed by the IFFT module.

The transmitting antennas are used to transmit analog signals.

The CDD precoding codebook module stores a precoding codebook which includes a plurality of codebooks, and performs precoding process on the data by selecting an optimal codebook from the precoding codebook.

The update-start signal transmitting module may send a start signal of updating the CDD delay value to the respective UEs.

The feedback information receiving module receives the local optimal CDD delay values in the precoding codebook or the local optimal CDD delay values in the precoding codebook together with the corresponding channel quality from the UE.

The probability analysis module performs probability analysis by using the feedback information received by the feedback information receiving module, to select the overall CDD delay value in the precoding codebook and send that to CDD precoding codebook module for updating the CDD delay value in the precoding codebook.

In the system of the present embodiment, after the update-start signal transmitting module in the BS sends a start signal of updating the CDD delay value to respective UEs, the update-start signal receiving module of each UE receives the start signal and starts the local optimal CDD delay value acquiring module. At this time, the local optimal CDD delay value acquiring module of each UE acquires a CDD delay value in the precoding codebook for obtaining the best channel quality for the user on each sub-band respectively, based on the channel estimation result output from the channel estimation sub-module, and sends the local optimal CDD delay value to the feedback information receiving module of the BS, and then the feedback information receiving module sends the local optimal CDD delay value or the local optimal CDD delay value together with corresponding channel quality received from each UE to the probability analysis module, and the probability analysis module may perform a probability contribution analysis on the local optimal CDD delay values and select Nt (the number of transmitting antennas) CDD delay values with highest probability. Then, the probability analysis module sends the selected Nt CDD delay values to the CDD precoding codebook module and updates the CDD delay values in the precoding codebook. Alternatively, the probability analysis module may perform a probability contribution analysis on the channel quality corresponding to the local optimal CDD delay values and select Nt CDD delay values with highest probability of channel quality, and then send the selected Nt CDD delay values to the CDD precoding codebook module and update the CDD delay values in the precoding codebook.

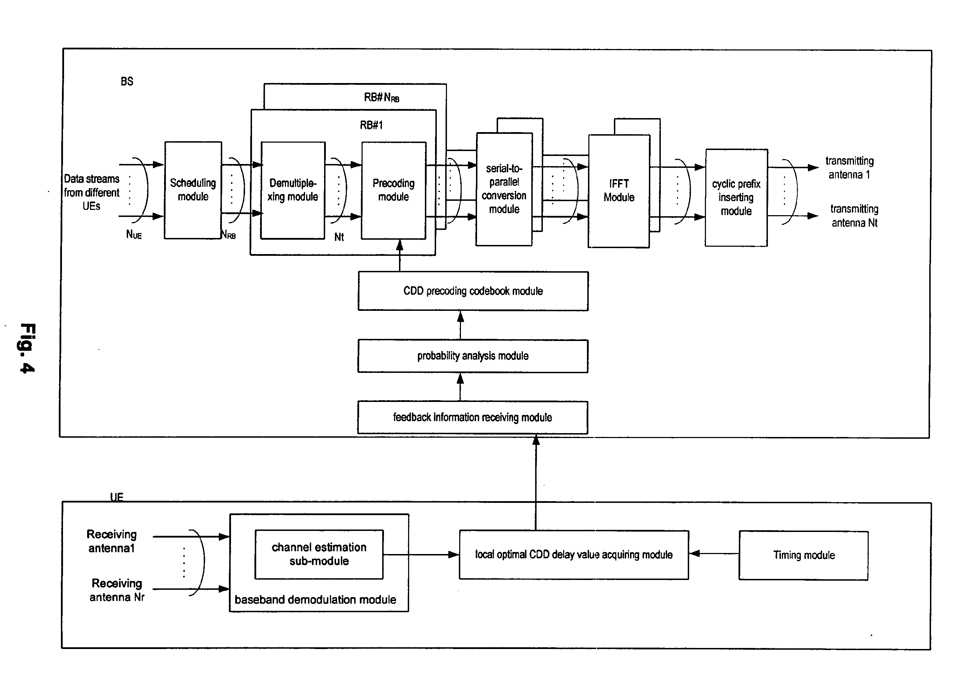

The method as described in the embodiment of fig. 2 can also be implemented by the system as shown in fig. 4, which automatically starts the update of the CDD delay values in the precoding codebook by the UEs periodically. The difference between the embodiment of fig. 4 and that of fig. 3 is that, in fig. 4, a timing module of the UE is used to periodically generate and send a start signal to the local optimal CDD delay value acquiring module, wherein the timing module of different UEs can be synchronous or asynchronous. In such case, the BS is not required to provide the update-start signal transmitting module. The process about how to acquire the local optimal CDD delay values in the precoding codebook by the UE and how to select the overall CDD delay values in the preceding codebook by the BS is the same with the system in fig. 3, and other operating processes are also similar to the system in fig. 3, which will not be described in detail.

Embodiment 2

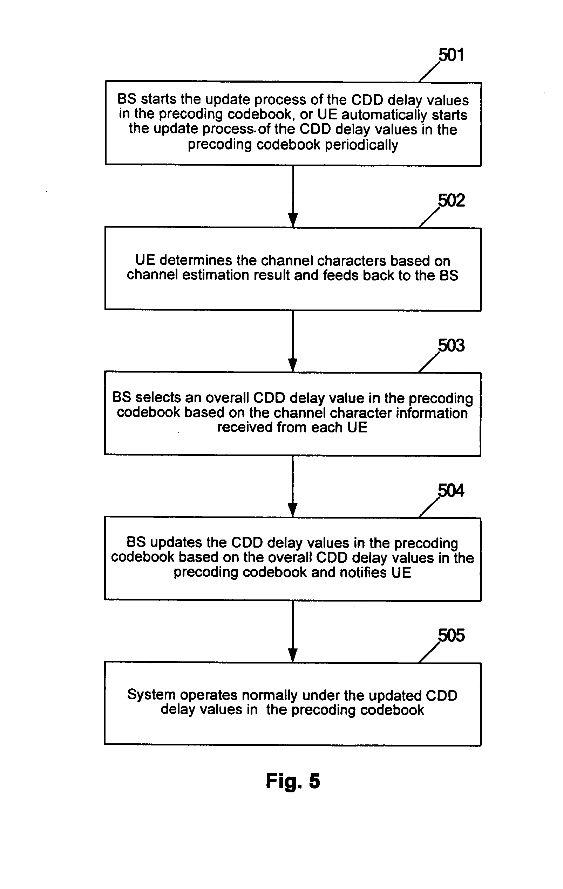

In this embodiment, a receiving side, i.e. the user equipment (UE), obtains the channel feature information thereof; and a transmitting side, i.e. the BS, according to the channel feature information collected from every UE, selects an overall CDD delay value in the precoding codebook to realize adaptive update of the CDD delay value in the precoding codebook, so as to ensure the system performance to the most extent. Referring to Fig. 5, in the multi-user scheduling MIMO-OFDMA system using the technique of precoding with CDD and including a BS and several UEs, the method according to the present embodiment includes the following steps.

In step 501, the BS sends a start signal to the UEs, to start the update process of CDD delay values in the precoding codebook, or the UEs may automatically start the update process of CDD delay value in the precoding codebook periodically.

In step 502, during each feedback period, each UE performs channel estimation by using the pilot information sent by the BS, and based on the result of channel estimation, determines the channel feature and feeds the result channel feature information to the BS.

In step 503, the BS, by using the channel feature information collected from each UE during different feedback periods in the update process, selects an overall CDD delay value in the precoding codebook.

In step 504, based on the selected overall CDD delay value, the BS updates the CDD delay values in the precoding codebook, and notifies the respective UEs.

In step 505, the system operates normally under the updated CDD delay values in the precoding codebook.

While the BS does not initiate starting update of the CDD delay values once again or the timing period for each UE to periodically automatically start update of CDD delay values does not come, each UE is not necessary to update the CDD delay values, and the BS is not necessary to select the overall CDD delay value.

In the above process, in the step 502 that the UE performs channel estimation by using the pilot information sent by the BS, and based on the result of channel estimation, determines the channel feature, the channel feature information may include the following types.

LOS (Line of Sight) and NLOS (Non-Line of Sight), wherein LOS means that since there is no barrier between the transmitting side and the receiving side and signals can be propagatedpropagate propagate in straight line, there is a constant component in channel response; and NLOS means that there exists barrier between the transmitting side and the receiving side, and there is no component propagated in straight line.

Fast fading and slow fading, wherein fast fading is caused by fast moving of the user and it means that the channel response changes quickly in time domain; and slow fading is caused by slow moving of the user and it means that the channel response changes slowly in time domain and there is a strong coherence between channel responses of adjacent time.

Flat fading and frequency-selective fading, wherein flat fading means that the channel response in frequency domain is flat, i.e. the number of multipath of channel response in time domain is small; and frequency-selective fading means that the channel response in frequency domain changes sharp with change of frequency, i.e. there exists a large number of multipaths in the channel response in time domain.

Any type of the above channel feature information can be transmitted to the BS using simple codes. The BS will select an overall CDD delay value in the precoding codebook based on the channel feature information collected from each UE.

The suitable CDD delay value in the precoding codebook may be various for different channel feature, details as follows.

For LOS and NLOS, the channel for LOS is suitable to use a larger CDD delay value in the precoding codebook; while the channel for NLOS is suitable to use a smaller CDD delay value in the precoding codebook.

For fast fading and slow fading, the channel for fast fading is suitable to use a larger CDD delay value in the precoding codebook; while the channel for slow fading is suitable to use a smaller CDD delay value in the precoding codebook.

For flat fading and frequency-selective fading, the channel for flat fading is suitable to use a larger CDD delay value in the precoding codebook; while the channel for frequency-selective fading is suitable to use a smaller CDD delay value in the precoding codebook.

The above-described step 503 that the BS, by using the channel feature information collected from each UE during different feedback periods in the update process, selects an overall CDD delay value in the precoding codebook suitably may be accomplished by the following two methods.

Method 1: the BS, based on the channel feature information feedback by the users, analyses the probability contribution of different channel features, and in connection with the channel feature with the highest probability, selects the CDD delay value in the precoding codebook according to the above three type of relations, i.e. selects Nt CDD delay values which match with the channel feature with highest probability as the overall CDD delay value in the precoding codebook.

Method 2: the BS, based on the channel feature information feedback by the users, first determines which kind of CDD delay value (a larger one or a smaller one) of the precoding codebook is suitable for the channel of each user, and then analyses the probability contribution of the lager and the smaller CDD delay values, and selects Nt CDD delay values with highest probability as the overall CDD delay value in the precoding codebook.

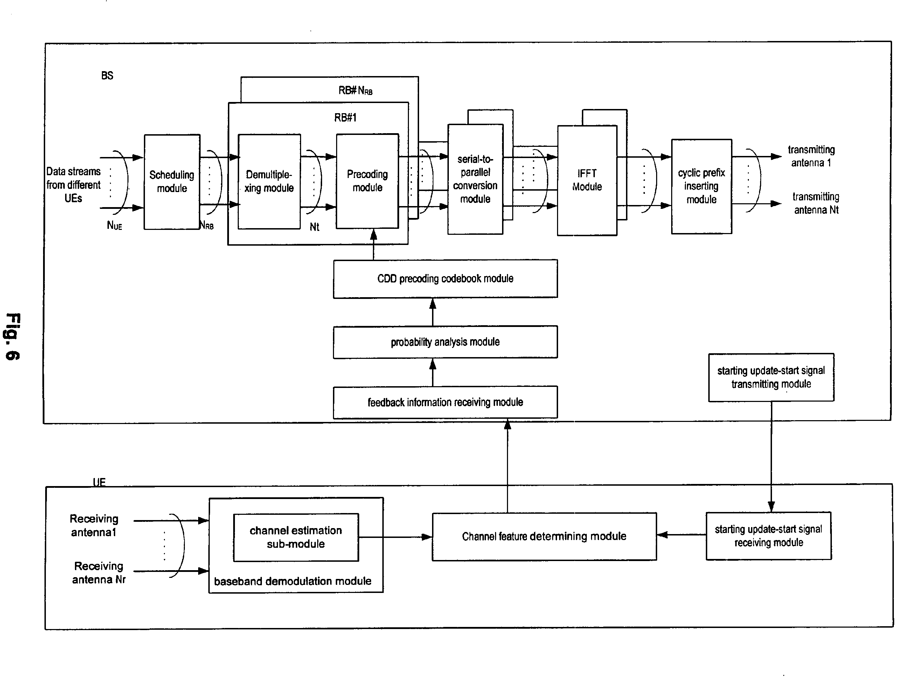

Referring to Fig. 6, the system in which the BS initiates update of the CDD delay values of the precoding codebook according to the embodiment of the present invention includes the BS, and a plurality of UEs (only one UE with detailed structure is shown in Fig. 6, and the others are similar and will not be described in detail herein).

The receiving side, i.e. the UE, each includes receiving antennas, a baseband demodulation module having a channel estimation sub-module, a channel feature determining module, and an update-start signal receiving module.

The receiving antennas are configured to receive signals from the BS.

The channel estimation sub-module is used to perform channel estimation based on the pilot information sent by the BS.

The update-start signal receiving module is used to receive a CDD delay value update-start signal from the BS, and start the channel feature determining module.

The channel feature determining module is configured to determine the channel feature, based on the channel estimation result from the channel estimation sub-module, upon receiving the start signal, and send the resulting channel feature information to the BS.

The transmitting side, i.e. the BS, includes a scheduling module, a demultiplexing module, a precoding module, a serial-to-parallel conversion module, an inverse Fourier transform (IFFT) module, a cyclic prefix inserting module, transmitting antennas, a CDD precoding codebook module, a update-start signal transmitting module, a feedback information receiving module, and a probability analysis module.

The scheduling module is configured to schedule wireless resources for multiple users based on the feedback information (such as CQI) from the users, and allocate resources such as time, frequency, space and code for the users.

The demultiplexing module is used to send data streams to different antenna branches.

The precoding module is used to perform precoding process on the data streams, i.e. perform weighting process on the data characters of the different antenna branches.

The serial-to-parallel conversion module is used to convert the serial data streams into parallel data streams.

The IFFT module is used to perform inverse Fourier transform on the parallel data streams, so as to transform the signals from frequency domain into time domain.

The cyclic prefix inserting module is used to insert a cyclic prefix into the data processed by the IFFT module.

The transmitting antenna is used to transmit analog signals.

The CDD precoding codebook module stores a precoding codebook which includes a plurality of codebooks, and performs precoding process on the data by selecting an optimal codebook from the precoding codebook.

The update-start signal transmitting module may send a start signal of updating the CDD delay value to the respective UEs.

The feedback information receiving module receives the channel feature information from each UE.

The probability analysis module performs probability analysis by using the channel feature information received by the feedback information receiving module, to select the overall CDD delay value in the precoding codebook and send that to the CDD precoding codebook module to update the CDD delay values in the precoding codebook.

In the system of the present embodiment, after the update-start signal transmitting module in the BS sends a start signal of updating the CDD delay value to a UE, an update-start signal receiving module of the UE receives the start signal and starts the channel feature determining module. At this time, the channel feature determining module of the UE determines the channel feature information of the user, based on the channel estimation result output from the channel estimation sub-module, and sends the resulting channel feature information to the feedback information receiving module of the BS, and then the feedback information receiving module sends the channel feature information received from each UE to the probability analysis module, and the probability analysis module may perform a probability contribution analysis on the channel feature information of each UE and select Nt (the number of transmitting antennas) CDD delay values which are matched with the channel feature having highest probability. Then, the probability analysis module sends the selected Nt CDD delay values to the CDD precoding codebook module and updates the CDD delay values in the precoding codebook. Alternatively, the probability analysis module may perform a probability contribution analysis on the CDD delay values which are matched with the channel feature of each UE and select Nt CDD delay values having highest probability, and then send the selected Nt CDD delay values to the CDD precoding codebook module to update the CDD delay values in the precoding codebook.

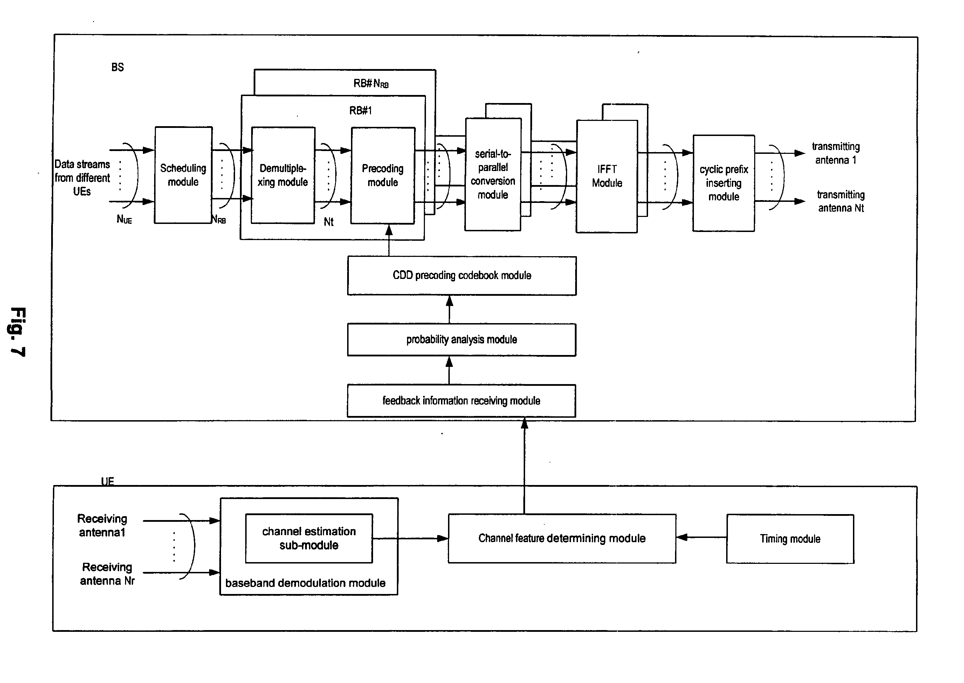

The method as described in the embodiment of fig. 5 can also be implemented by the system as shown in fig. 7, which automatically starts the update of the CDD delay values in the precoding codebook by each UE periodically. The difference between the embodiment of fig. 7 and that of fig. 6 is that, in fig. 7, a timing module of the UE is used to periodically generate and send a start signal to the channel feature determining module, wherein the timing module of different UEs can be synchronous or asynchronous. In such case, the BS is not required to provide the update-start signal transmitting module. The process on how to select the overall CDD delay values in the precoding codebook by the BS is the similar to the system in fig. 6, and other operating processes are also similar to the system in fig. 6 and will not be described in detail.

Embodiment 3

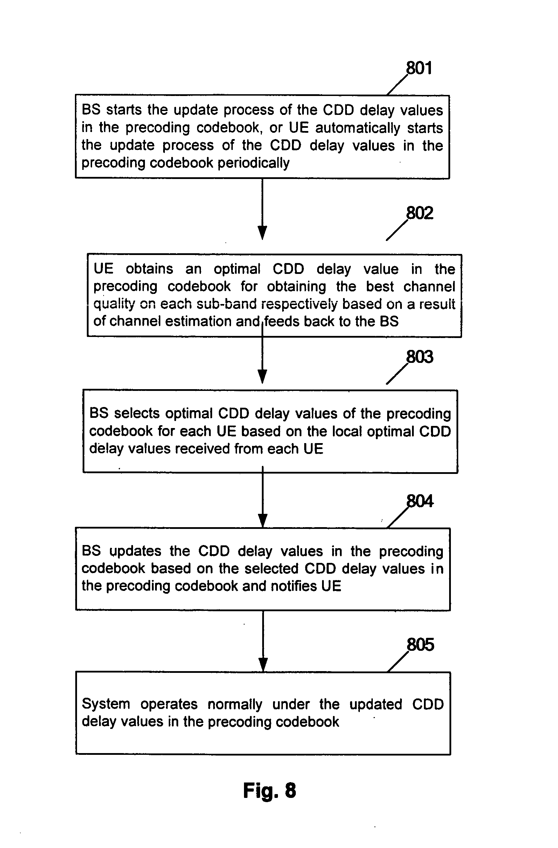

According to the present embodiment, a receiving side, i.e. the user equipment (UE), obtains an optimal CDD delay value in the precoding codebook, and feeds it back to the BS; and a transmitting side, i.e. the BS, according to the optimal CDD delay values collected from every UE, selects an optimal CDD delay value in the precoding codebook for each UE to realize adaptive update of the CDD delay value in the precoding codebook, and particularly to update the CDD delay value for each UE independently, so as to ensure the system performance to the most extent. Referring to Fig. 8, in the multi-user scheduling MIMO-OFDMA system using precoding technique with CDD and including a BS and several UEs, the method according to the present embodiment includes the following steps.

In step 801, the BS sends a start signal to the UE, to start the update process of CDD delay value in the precoding codebook, or the UE may periodically automatically start the update process of CDD delay value in the precoding codebook.

In step 802, during each feedback period, the UE performs channel estimation by using the pilot information sent by the BS, and based on the result of channel estimation, obtains an optimal CDD delay value in the precoding codebook at each sub-band respectively, by which an optimal channel quality can be attained, and further feeds the local optimal CDD delay values in the precoding codebook or these local optimal CDD delay values in the precoding codebook together with corresponding channel qualities to the BS.

In step 803, the BS, by using the local optimal CDD delay values in the precoding codebook or the local optimal CDD delay values in the precoding codebook together with corresponding channel qualities collected from respective UEs during the feedback periods in the update process, selects an optimal CDD delay value in the precoding codebook for each UE.

In step 804, based on the selected CDD delay value, the BS updates the CDD delay values in the precoding codebook, and notifies the respective UEs.

In step 805, the system operates normally under the updated CDD delay values in the precoding codebook.

While the BS does not initiate starting update of the CDD delay values once again or the timing period for the UE to periodically automatically start update of CDD delay values does not come, the UE is not necessary to update the CDD delay values, and the BS is not necessary to select the CDD delay value. In the normal operations, for a scheduled user's data, the BS will process the data using the CDD delay value in the precoding codebook corresponding to this user.

In the above process, the step 802 that the UE performs channel estimation by using the pilot information sent by the BS, and based on the result of channel estimation, obtains an optimal CDD delay value in the precoding codebook at each sub-band respectively, by which an optimal channel quality can be attained, may be accomplished by the following two methods.

Method 1: By exhaustive search, on each sub-band, test to search possible CDD delay values of the precoding codebook one by one within the possible range of the CDD delay values, and the resulting CDD delay value which makes the channel quality (such as capacity, data rate, and error rate) of the user best is the optimal CDD delay value on the respective sub-band. The range of the CDD delay value is $[0, Nc-1]$, wherein Nc is the total number of the subcarriers. Since it is a cyclical shifting operation, there exists periodicity, and therefore the range of the CDD delay value can also be expressed by $[-Nc/2, Nc/2-1]$. In a multi-user system, generally the value selected as the optimal CDD delay value is in close proximity to 0, i.e. its absolute value is small, and therefore the range of the CDD delay value can be expressed by [-Nc/2, Nc/2-1], so as to narrow the searching range to reduce the complexity.

Method 2: Obtain the optimal CDD delay value in the precoding codebook that makes the channel quality of the user best is obtained by calculation. The following will explain how to get the optimal CDD delay value by calculation, taking capacity as an example.

The capacity acquired by the UE on each sub-band by a calculating a capacity expression, can be expressed as follows:

$$C_M(d_1, \cdots, d_{Nt}) = f(H, U, d_1, \cdots, d_{Nt}) ,$$

wherein $C_M$ represents the capacity on the M$^{th}$ sub-band, H represents a channel response from the transmitting antenna to the receiving antenna obtained by channel estimation, $d_i$ represents the CDD delay value in the precoding codebook corresponding to the i$^{th}$ transmitting antenna, and Nt represents the number of transmitting antennas. In a precoding codebook with CDD, the codebook $P = diag(e^{\frac{-j2\pi kd_1}{Nc}}, \cdots, e^{\frac{-j2\pi kd_{Nt}}{Nc}})U$ wherein Nc represents the number of all subcarriers, the diagonal matrix is the codebook part of CDD in the precoding codebook, U is the codebook part designed by conventional method in the precoding, and U has different expression format in different operation mode (such as single-user Diversity mode, single-user space multiplexing mode, and multi-user space multiplexing mode). It can obtain an optimal CDD delay value in the precoding codebook by optimizing $C_M$, for example using Lagrange Algorithm.

By any one of the two methods above, the UE may obtain an optimal CDD delay value of precoding codebook which makes the channel quality of the user best on each sub-band respectively. Then, the UE will feed the local optimal CDD delay values in the precoding codebook or these local optimal CDD delay values in the precoding codebook together with corresponding channel qualities to the BS.

In the present embodiment, the step that the BS, by using the local optimal CDD delay values in the precoding codebook or the local optimal CDD delay values in the precoding codebook together with corresponding channel qualities collected from every UE, selects an optimal CDD delay value in the precoding codebook for each UE, may adopt many methods to measure and select. The following will give out two methods as example.

Method 1: Using the local optimal CDD delay values in the precoding codebook feedback by the UE in different feedback period but in the same update process, the overall CDD delay value will be selected based on probability density distribution of the aforesaid CDD delay values.

Assuming {d($i_{UE}$, is$_B$, $i_{Interval}$), $i_{UE}$=1, ...,$N_{UE}$, $i_{SB}$=1, ...,$N_{SB}$, $i_{Interval}$=1, ...,$N_{Interval}$} is a set of the CDD delay values in the precoding codebook feedback by the user $i_{UE}$ in different feedback period but in the same update process, wherein $i_{UE}$ represents an index of the UE, $i_{SB}$ represents an index of the sub-band, $i_{Interval}$ represents an index of time domain feedback period, $N_{SB}$ represents the number of the sub-bands, $N_{Interval}$ represents the number of feedback periods in one update process. Based on the above set, the BS renders a probability density distribution function of {d($i_{UE}$, $i_{SB}$, $i_{Interval}$), $i_{UE}$=1, ...,$N_{UE}$, $i_{SB}$=1, ...,$N_{SB}$, $i_{Interval}$=1, ...,$N_{Interval}$}, and uses Nt CDD delay values with highest probability as the optimal CDD delay values in the precoding codebook for user $i_{UE}$. As such, the resulting CDD delay value has a highest probability of being selected as the optimal CDD delay value by user $i_{UE}$, so as to provide a gain of performance and ensure the system performance.

Method 2: Using the local optimal CDD delay values in the precoding codebook together with the corresponding channel qualities feedback by the UE in different feedback period but in the same update process, selection is performed based on the probability density distribution of the channel qualities.

When using this method, the UE, while feeding back the optimal CDD delay values to the BS, will feed back the corresponding channel quality to the respective CDD delay values. Here, assuming {di$_{UE}$($i_{SB}$, $i_{Interval}$), $i_{SB}$=1, ...,$N_{SB}$, $i_{Interval}$=1, ....$N_{Interval}$} is a set of the local optimal CDD delay values feedback by user $i_{UE}$, {C $i_{UE}$ ($i_{SB}$,$i_{Interval}$), $i_{SB}$=1, ..., $N_{SB}$, $i_{Interval}$=1, ...,$N_{Interval}$} is a COI feedback by user $i_{UE}$ corresponding to {di$_{UE}$ ($i_{SB}$, $i_{Interval}$), $i_{SB}$=1, ...,$N_{SB}$, $i_{Interval}$=1, ..., $N_{Interval}$}. Based on the above two sets, the BS will first calculate C(d$_i$), $C(d_i) = \sum_{d=d_i} C_{i_{UE}}(i_{SB}, i_{Interval})$, which indicates a sum of CQI corresponding to the CDD delay value of $d_i$ in the precoding codebook, then plots a function of the probability distribution of {C(d$_i$)}, and then makes the Nt CDD delay values with highest C(d$_i$) as the optimal CDD delay value in the precoding codebook for user $i_{UE}$. As such, the resulting optimal CDD delay value in the precoding codebook for user $i_{UE}$ is able to provide a larger CQI with a higher probability for the system, so as to provide a gain of performance and ensure the system performance.

By using any one of the above methods, the optimal CDD delay value in the precoding codebook can be obtained for each UE.

The system in which the BS initiates update of the CDD delay values in the precoding codebook according to the embodiment of the present invention may utilize structure as shown in fig. 3, which includes a BS and a plurality of UEs.

The receiving side has a same structure with that of the embodiment 1, that is:

Each UE includes receiving antennas, a baseband demodulation module having a channel estimation sub-module, a local optimal CDD delay value acquiring module, and an update-start signal receiving module.

The receiving antennas are configured to receive signals from the BS.

The channel estimation sub-module is used to perform channel estimation based on the pilot information sent by the BS.

The update-start signal receiving module is used to receive a update-start signal of CDD delay value from the BS, and start the local optimal CDD delay value acquiring module.

The local optimal CDD delay value acquiring module is configured to acquire the local optimal CDD delay value for obtaining the best channel quality on each sub-band respectively, based on the channel estimation result from the channel estimation sub-module, upon receiving the start signal, and send the local optimal CDD delay value or the local optimal CDD delay value together with corresponding channel quality to the BS.

The transmitting side, i.e. the BS, having a similar structure as the corresponding modules of embodiment 1, includes a scheduling module, a demultiplexing module, a precoding module, a serial-to-parallel conversion module, an inverse Fourier transform (IFFT) module, a cyclic prefix inserting module, transmitting antennas, a CDD precoding codebook module, a update-start signal transmitting module, a feedback information receiving module, and a probability analysis module.

The scheduling module is configured to schedule wireless resources for multiple users based on the feedback information (such as CQI) from the users, and allocate resources such as time, frequency, space and code for the users.

The demultiplexing module is used to send data streams to different antenna branches.

The precoding module is used to perform precoding process on the data streams, i.e. perform weighting process on the data characters of the different antenna branches.

The serial-to-parallel conversion module is used to convert the serial data streams into parallel data streams.

The IFFT module is used to perform inverse Fourier transform on the parallel data streams, so as to transform the signals from frequency domain into time domain.

The cyclic prefix inserting module is used to insert a cyclic prefix into the data processed by the IFFT module.

The transmitting antennas are used to transmit analog signals.

The CDD precoding codebook module stores a precoding codebook which includes a plurality of codebooks, and performs precoding process on the data by selecting an optimal codebook from the precoding codebook.

The update-start signal transmitting module may send a start signal of updating the CDD delay value to the respective UEs.

The feedback information receiving module receives the local optimal CDD delay values in the precoding codebook or the local optimal CDD delay values in the precoding codebook together with the corresponding channel quality from the UE.

The probability analysis module is different from that of embodiment 1 in that, the probability analysis module of the present embodiment performs probability analysis on the feedback information of each user by using the feedback information received by the feedback information receiving module respectively, so as to select the optimal CDD delay value in the precoding codebook for each user.

In the system of the present embodiment, after the update-start signal transmitting module in the BS sends a start signal of updating the CDD delay value to respective UEs, the update-start signal receiving module of each UE receives the start signal and starts the local optimal CDD delay value acquiring module. At this time, the local optimal CDD delay value acquiring module of each UE acquires a CDD delay value in the precoding codebook for obtaining the best channel quality for the user on each sub-band respectively, based on the channel estimation result output from the channel estimation sub-module, and sends the local optimal CDD delay value to the feedback information receiving module of the BS, and then the feedback information receiving module sends the local optimal CDD delay value or the local optimal CDD delay value together with corresponding channel quality received from each UE to the probability analysis module, and the probability analysis module may perform a probability contribution analysis on the local optimal CDD delay values and select Nt CDD delay values with highest probability for each user. Then, the probability analysis module sends the Nt CDD delay values selected for each user to the CDD precoding codebook module and updates the CDD delay values in the precoding codebook. Alternatively, the probability analysis module may perform a probability contribution analysis on the channel quality corresponding to the local optimal CDD delay values for each user independently and select Nt CDD delay values corresponding to the channel quality with highest probability for each user, and then send the selected Nt CDD delay values to the CDD precoding codebook module and update the CDD delay values in the precoding codebook. In the normal operations, for a scheduled user's data, the BS will process on the data using the CDD delay value in the precoding codebook corresponding to this user.

The method as described in the embodiment of fig. 8 can also be implemented by the system as shown in fig. 4, referring to the above descriptions, the probability analysis module of the present embodiment has some differences with that of embodiment 1, and in the system of the present embodiment, the update process of CDD delay values in the precoding codebook is automatically performed by the UE (by a timing module) periodically.

Embodiment 4

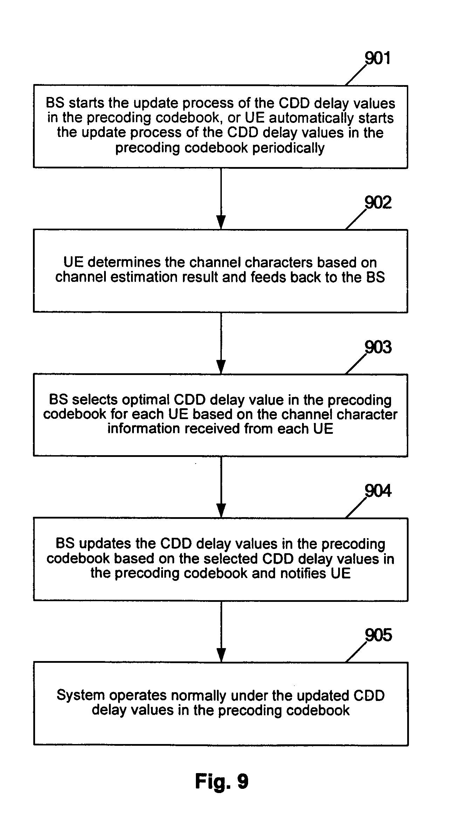

In this embodiment, a receiving side, i.e. the user equipment (UE), obtains the channel feature information thereof; and a transmitting side, i.e. the BS, according to the channel feature information collected from every UE, selects an optimal CDD delay value in the precoding codebook for each UE to realize adaptive update of the CDD delay value in the precoding codebook, so as to ensure the system performance to the most extent. Referring to Fig. 9, in the multi-user scheduling MIMO-OFDMA system using the technique of precoding with CDD and including a BS and several UEs, the method according to the present embodiment includes the following steps.

In step 901, the BS sends a start signal to the UE, to start the update process of CDD delay values in the precoding codebook, or the UE may automatically start the update process of CDD delay value in the precoding codebook periodically.

In step 902, during each feedback period, the UE performs channel estimation by using the pilot information sent by the BS, and based on the result of channel estimation, determines the channel feature and feeds the resulting channel feature information to the BS.

In step 903, the BS, by using the channel feature information collected from each UE during different feedback periods in the update process, selects an optimal CDD delay value in the precoding codebook for each UE.

In step 904, based on the selected CDD delay value, the BS updates the CDD delay values in the precoding codebook, and notifies the respective UEs.

In step 905, the system operates normally under the updated CDD delay values of the precoding codebook.

While the BS does not initiate starting update of the CDD delay values once again or the timing period for the UE to periodically automatically start update of CDD delay values does not come, the UE is not necessary to update the CDD delay values, and the BS is not necessary to select the overall CDD delay value.

In the above process, in the step 902 that the UE performs channel estimation by using the pilot information sent by the BS, and based on the result of channel estimation, determines the channel feature, the channel feature information may include the following types.

LOS (Line of Sight) and NLOS (Non-Line of Sight), wherein LOS means that since there is no barrier between the transmitting side and the receiving side and signals can be propagated in straight line, there is a constant component in channel response; and NLOS means that there exists barrier between the transmitting side and the receiving side, and there is no component propagated in straight line.

Fast fading and slow fading, wherein fast fading is caused by fast moving of the user and it means that the channel response changes quickly in time domain; and slow fading is caused by slow moving of the user and it means that the channel response changes slowly in time domain and there is a strong coherence between channel responses of adjacent time.

Flat fading and frequency-selective fading, wherein flat fading means that the channel response in frequency domain is flat, i.e. the number of multipath of channel response in time domain is small; and frequency-selective fading means that the channel response in frequency domain changes sharp with change of frequency, i.e. there exists a large number of multipaths in the channel response in time domain.

Any type of the above channel feature information can be transmitted to the BS by using simple codes. The BS will select an optimal CDD delay value in the precoding codebook for each UE based on the channel feature information collected from each UE.

The suitable CDD delay value in the precoding codebook may be various for different channel feature, details as follows.

For LOS and NLOS, the channel for LOS is suitable to use a larger CDD delay value in the precoding codebook; while the channel for NLOS is suitable to use a smaller CDD delay value in the precoding codebook.

For fast fading and slow fading, the channel for fast fading is suitable to use a larger CDD delay value in the precoding codebook; while the channel for slow fading is suitable to use a smaller CDD delay value in the precoding codebook.

For flat fading and frequency-selective fading, the channel for flat fading is suitable to use a larger CDD delay value in the precoding codebook; while the channel for frequency-selective fading is suitable to use a smaller CDD delay value in the precoding codebook.

The above-described step 903 that the BS, by using the channel feature information collected from each UE during different feedback periods in the update process, selects an optimal CDD delay value in the precoding codebook for each UE may be accomplished by the following two methods.

Method 1: the BS, based on the channel feature information feedback by the users, analyses the probability contribution of different channel feature for each user, and in connection with the channel feature with the highest probability, selects an optimal CDD delay value in the precoding codebook for each user according to the above three type of relations, i.e. selects Nt CDD delay values which match with the channel feature having highest probability as the optimal CDD delay value in the precoding codebook for the respective users.

Method 2: the BS, based on the channel feature information feedback by the users, first determines which kind of CDD delay value (a larger one or a smaller one) of the precoding codebook is suitable for the channel of each user, and then analyses the probability contribution of the lager and the smaller CDD delay values for each user independently, and selects Nt CDD delay values with highest probability as the optimal CDD delay value in the precoding codebook for the respective users.

The system in which the BS initiates update of the CDD delay values of the precoding codebook according to the embodiment of the present invention may be implemented with the structure similar to that of fig. 6, and includes a BS and a plurality of UEs.

The receiving side has a same structure as that of the embodiment 2, that is:

The receiving side, i.e. the UE, each includes receiving antennas, a baseband demodulation module having a channel estimation sub-module, a channel feature determining module, and an update-start signal receiving module.

The receiving antenna are configured to receive signals from the BS.

The channel estimation sub-module is used to perform channel estimation based on the pilot information sent by the BS.

The update-start signal receiving module is used to receive a CDD delay value update-start signal from the BS, and start the channel feature determining module.

The channel feature determining module is configured to determine the channel feature, based on the channel estimation result from the channel estimation sub-module, upon receiving the start signal, and send the resulting channel feature information to the BS.

The transmitting side, i.e. the BS, includes a scheduling module, a demultiplexing module, a precoding module, a serial-to-parallel conversion module, an inverse Fourier transform (IFFT) module, a cyclic prefix inserting module, transmitting antennas, a CDD precoding codebook module, a update-start signal transmitting module, a feedback information receiving module, and a probability analysis module.

The scheduling module is configured to schedule wireless resources for multiple users based on the feedback information (such as CQI) from the users, and allocate resources such as time, frequency, space and code for the users.

The demultiplexing module is used to send data streams to different antenna branches.

The precoding module is used to perform precoding process on the data streams, i.e. perform weighting process on the data characters of the different antenna branches.

The serial-to-parallel conversion module is used to convert the serial data streams into parallel data streams.

The IFFT module is used to perform inverse Fourier transform on the parallel data streams, so as to transform the signals from frequency domain into time domain.

The cyclic prefix inserting module is used to insert a cyclic prefix into the data processed by the IFFT module.

The transmitting antenna is used to transmit analog signals.

The CDD precoding codebook module stores a precoding codebook which includes a plurality of codebooks, and performs precoding process on the data by selecting an optimal codebook from the precoding codebook.

The update-start signal transmitting module may send a start signal of updating the CDD delay value to the respective UEs.

The feedback information receiving module receives the channel feature information from each UE.

The probability analysis module is different from that of embodiment 2 in that, the probability analysis module performs probability analysis on the channel feature of each user by using the channel feature information received by the feedback information receiving module, to select the optimal CDD delay value in the precoding codebook for each user and send that to CDD precoding codebook module to update the CDD delay values in the precoding codebook.

In the system of the present embodiment, after the update-start signal transmitting module in the BS sends a start signal of updating the CDD delay value to a UE, an update-start signal receiving module of the UE receives the start signal and starts the channel feature determining module. At this time, the channel feature determining module of the UE determines the channel feature information of the user, based on the channel estimation result output from the channel estimation sub-module, and sends the result channel feature information to the feedback information receiving module of the BS, and then the feedback information receiving module sends the channel feature information received from each UE to the probability analysis module, and the probability analysis module may perform a probability contribution analysis on the channel feature information of each UE and select Nt (the number of transmitting antennas) CDD delay values which are matched with the channel feature having highest probability for each user. Then, the probability analysis module sends the selected Nt CDD delay values to the CDD precoding codebook module and updates the CDD delay values in the precoding codebook. Alternatively, the probability analysis module may perform a probability contribution analysis on the CDD delay values which are matched with the channel feature of each UE and select Nt CDD delay values having highest probability for each user, and then send the selected Nt CDD delay values to the CDD precoding codebook module to update the CDD delay values in the precoding codebook.

The method as described in the embodiment of fig. 9 can also be implemented by the system as shown in fig. 7, referring to the above descriptions, the probability analysis module of the present embodiment has some differences with that of embodiment 1, and in the system of the present embodiment, the update process of CDD delay values of precoding codebook is automatically performed by the UE (by a timing module) periodically.

Embodiment 5

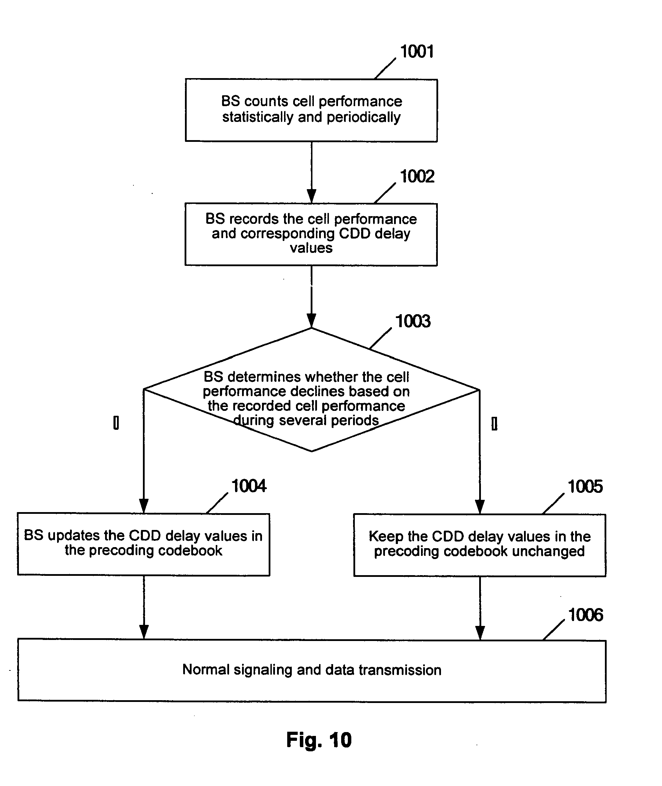

According to the present embodiment, a transmitting side, i.e. the BS, according to the cell performance obtained statistically in several periods, determines whether it is required to update the CDD values in the precoding codebook, if not required, keep the CDD values in the precoding codebook unchanged, and if required, change the CDD values in the precoding codebook and realize adaptive update of the CDD delay value in the precoding codebook so as to ensure the system performance to the most extent. Referring to Fig. 10, in the multi-user scheduling MIMO-OFDMA system using precoding technique with CDD and including a BS and several UEs, the method according to the present embodiment includes the following steps.

In step 1001, the BS statistically counts the cell performance periodically.

Based on different requirements, the cell performance can be for example an average throughput, an average error rate, an average delay, or a boundary user throughput.

In step 1002, during each statistical period, the BS records the cell performance and the corresponding CDD delay value.

In step 1003, the BS, based on the recorded cell performance of several periods, determines whether the cell performance declines or not, and if not, the process proceeds to step 1005; if yes, the process proceeds to step 1004.

In step 1004, the BS updates the CDD delay values in the precoding codebook.

The methods for updating may include for example using the unused CDD delay values priorly based on the recorded information by the BS; or using the CDD delay values with higher performance in the past time priorly. The updated CDD delay values may be sent to the terminals according to the designing requirements of system, or it is not necessary to notify the terminals.

In step 1005, the CDD delay values in the precoding codebook are kept unchanged.

In step 1006, normal signaling and data transmission are carried out.

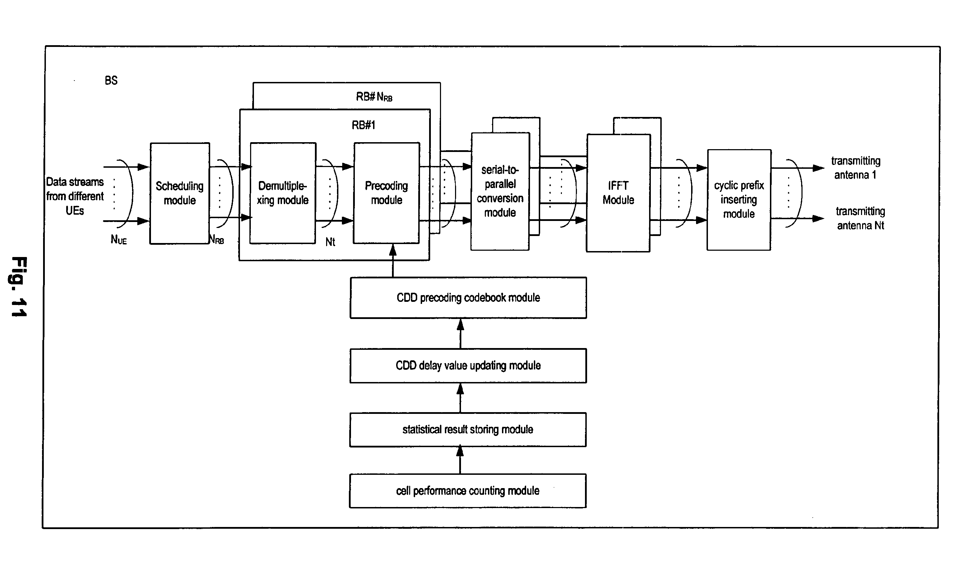

Referring to fig. 11, according to the embodiment of the present invention, the system in which the BS initiates update of the CDD delay values in the precoding codebook includes a transmitting side, i.e., the BS.

The BS includes a scheduling module, a demultiplexing module, a precoding module, a serial-to-parallel conversion module, an inverse Fourier transform (IFFT) module, a cyclic prefix inserting module, transmitting antennas, a CDD precoding codebook module, a CDD delay value updating module, a statistical result storing module, and a cell performance counting module.

The scheduling module is configured to schedule wireless resources for multiple users based on the feedback information (such as CQI) from the users, and allocate resources such as time, frequency, space and code for the users.

The demultiplexing module is used to send data streams to different antenna branches.

The precoding module is used to perform precoding process on the data streams, i.e. perform weighting process on the data characters of the different antenna branches.

The serial-to-parallel conversion module is used to convert the serial data streams into parallel data streams.

The IFFT module is used to perform inverse Fourier transform on the parallel data streams, so as to transform the signals from frequency domain into time domain.

The cyclic prefix inserting module is used to insert a cyclic prefix into the data processed by the IFFT module.

The transmitting antennas are used to transmit analog signals.

The CDD precoding codebook module stores a precoding codebook which includes a plurality of codebooks, and performs precoding process on the data by selecting an optimal codebook from the precoding codebook.

The cell performance counting module counts the cell performance periodically and stores the cell performance with the corresponding CDD delay value into the statistical result storing module.

The CDD delay value updating module updates the CDD delay values in the precoding codebook by using the result stored in the statistical result storing module.

The CDD delay value updating module selects the unused CDD delay values based on the recorded information by the BS, or selects the CDD delay values with higher performance in the past time based on the recorded information by the BS, to update the CDD delay values in the precoding codebook.

Embodiment 6

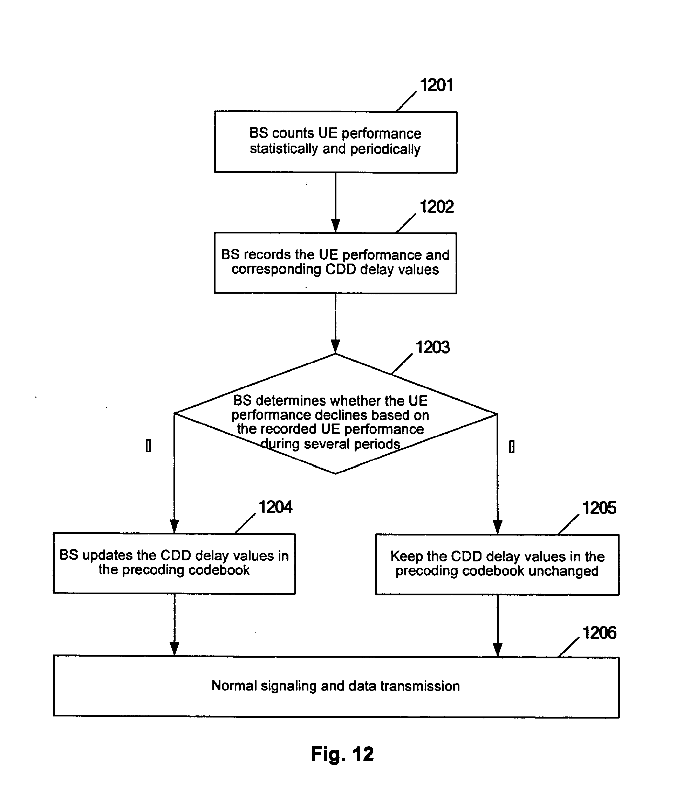

According to the present embodiment, a transmitting side, i.e. the BS, according to each UE performance obtained statistically in several periods, determines whether it is required to update the CDD values in the precoding codebook for the respective UEs or not, if not required, keeps the CDD values in the precoding codebook unchanged for the respective UE, and if required, changes the CDD values in the precoding codebook for the respective UEs and realizes independent adaptive update of the CDD delay value in the precoding codebook for each UE so as to ensure the system performance to the most extent. Referring to Fig. 12, in the multi-user scheduling MIMO-OFDMA system using precoding technique with CDD and including a BS and several UEs, the method according to the present embodiment includes the following steps.

In step 1201, the BS statistically counts the performance of each UE periodically.

Based on different requirements, the UE performance can be for example an average throughput, an average error rate, or an average delay.

In step 1202, during each statistical period, the BS records the UE performance and the corresponding CDD delay value.

In step 1203, the BS, based on the recorded UE performance of the several periods, determines whether the UE performance declines or not, and if not, the process proceeds to step 1205; if yes, the process proceeds to step 1204.

In step 1204, the BS updates the CDD delay values in the precoding codebook for the respective UEs.

The method for updating may include for example, based on the recorded information by the BS, using the unused CDD delay values priorly, or using the CDD delay values with higher performance in the past time priorly. The updated CDD delay values may be sent to the terminal according to the designing requirements of system, or it is not necessary to notify the terminal.

In step 1205, the CDD delay values in the precoding codebook are kept unchanged.

In step 1206, normal signaling and data transmission are performed.

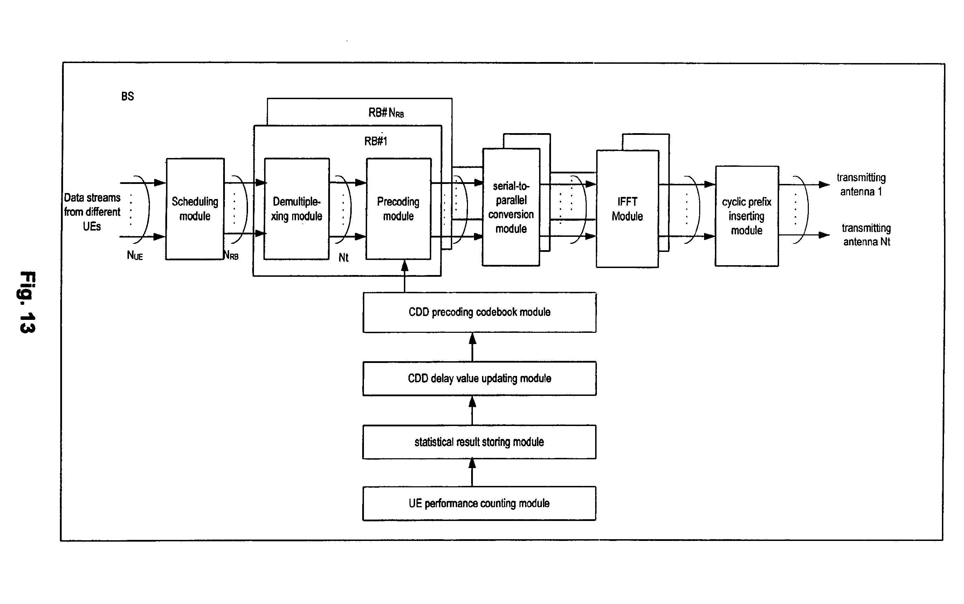

Referring to fig. 13, according to the embodiment of the present invention, the system in which the BS initiates update of the CDD delay values in the precoding codebook includes a transmitting side, i.e., a BS.

The BS includes a scheduling module, a demultiplexing module, a precoding module, a serial-to-parallel conversion module, an inverse Fourier transform (IFFT) module, a cyclic prefix inserting module, transmitting antennas, a CDD precoding codebook module, a CDD delay value updating module, a statistical result storing module, and a UE performance counting module.

The scheduling module is configured to schedule wireless resources for multiple users based on the feedback information (such as CQI) from the users, and allocate resources such as time, frequency, space and code for the users.

The demultiplexing module is used to send data streams to different antenna branches.

The precoding module is used to perform precoding process on the data streams, i.e. perform weighting process on the data characters of the different antenna branches.

The serial-to-parallel conversion module is used to convert the serial data streams into parallel data streams.

The IFFT module is used to perform inverse Fourier transform on the parallel data streams, so as to transform the signals from frequency domain into time domain.

The cyclic prefix inserting module is used to insert a cyclic prefix into the data processed by the IFFT module.

The transmitting antennas are used to transmit analog signals.

The CDD precoding codebook module stores a precoding codebook which includes a plurality of codebooks, and performs precoding process on the data by selecting an optimal codebook from the precoding codebook.

The UE performance counting module counts the UE performance periodically and stores the UE performance together with the corresponding CDD delay value into the statistical result storing module.

The CDD delay value updating module updates the CDD delay values in the precoding codebook by using the result stored in the statistical result storing module.

The CDD delay value updating module selects the unused CDD delay values based on the recorded information by the BS, or selects the CDD delay values with higher performance in the past time based on the recorded information by the BS, to update the CDD delay values in the precoding codebook for the respective UE.

Although the present invention is described with the specific embodiments of the method, system, BS, and UE for determining CDD delay value, the invention is not limited to the implements in the descriptions and it can be applied to any field suitable to implement the invention. The other advantages can be easily obtained by the skilled in the art and various changes can be made. Therefore, the invention is not limited to the specific details, respective implementations and the illustrations herein, without departing from the general spirit and scope of the claims and its equivalent.

## Claims

1. A method for determining Cyclic Delay Diversity (CDD) delay value, applied in a CDD precoding system which includes a Base Station (BS) and a plurality of User Equipments (UEs), the method comprising

Step A1, obtaining an optimal CDD delay value in the precoding codebook for obtaining the best channel quality on each sub-band respectively based on a result of channel estimation and feeding back to the BS by the UE;

Step A2, selecting an overall CDD delay value in the precoding codebook based on the local optimal CDD delay values received from each UE by the BS;

Step A3, updating the CDD delay values in the precoding codebook based on the overall CDD delay value in the precoding codebook by the BS.

2. The method as defined in claim 1, further comprising
prior to step A1, sending a start signal by the BS to the UE to start the update process of the CDD delay values in the precoding codebook, or automatically starting the update process of the CDD delay values in the precoding codebook by the UE periodically.

3. The method as defined in claim 1, wherein the step A1 further includes
performing channel estimation by using pilot information sent from the BS by the UE;
obtaining a CDD delay value in the precoding codebook for obtaining a largest capacity, or a highest data rate, or a smallest error rate on each sub-band based on the result of the channel estimation by the UE;
sending the local optimal CDD delay value to the BS by the UE.

4. The method as defined in claim 1, wherein the step of obtaining an optimal CDD delay value in the precoding codebook for obtaining the best channel quality on each sub-band respectively by the UE comprises
testing i all possible CDD values in a predefined range of the CDD values on each sub-band to find the optimal CDD delay value in the precoding codebook for obtaining the best channel quality for the UE.

5. The method as defined in claim 1, wherein the step of obtaining an optimal CDD delay value in the precoding codebook for obtaining the best channel quality on each sub-band respectively by the UE comprises
calculating to obtain the optimal CDD delay value which corresponds to the best channel quality on each sub-band for the UE.

6. The method as defined in claim 1, wherein the step A2 further comprises
receiving the local optimal CDD delay values from each UE and performing probability analysis on the local optimal CDD delay values by the BS;
selecting Nt CDD delay values with the highest probability as the overall CDD delay values in the precoding codebook by the BS, wherein Nt is the number of transmitting antennas.

7. The method as defined in claim 1, wherein
the step A1 further comprises
obtaining an optimal CDD delay value in the precoding codebook for obtaining the best channel quality on each sub-band respectively based on a result of channel estimation and feeding the optimal CDD delay value together with a corresponding channel quality back to the BS by the UE;
the step A2 further comprises
receiving the local optimal CDD delay value together with the corresponding channel quality from each UE and performing probability analysis on the channel quality corresponding to the local optimal CDD delay values by the BS;
selecting Nt CDD delay values with highest probability as the overall CDD delay values in the precoding codebook by the BS.

8. A system for determining Cyclic Delay Diversity (CDD) delay value, comprising a Base Station (BS) and a plurality of User Equipments (UEs), said BS including a CDD precoding codebook module for storing codebooks, each said UE including a baseband demodulation module having a channel estimation sub-module, wherein
the UE further includes a local optimal CDD delay value acquiring module for acquiring the local optimal CDD delay value for obtaining the best channel quality on each sub-band respectively, based on the channel estimation result from the channel estimation sub-module, and sending the local optimal CDD delay value to the BS; and
the BS further includes a feedback information receiving module for receiving the local optimal CDD delay values in the precoding codebook from the UE, and a probability analysis module for performing probability analysis on the local optimal CDD delay values for each UE, selecting Nt CDD delay values with highest probability as an overall CDD delay value in the precoding codebook and sending that to the CDD precoding codebook module for updating the CDD delay values in the precoding codebook.

9. The system as defined in claim 8, wherein

the local optimal CDD delay value acquiring module of the UE is further configured to acquire the local optimal CDD delay value for obtaining the best channel quality on each sub-band respectively, based on the channel estimation result from the channel estimation sub-module, and sending the local optimal CDD delay value together with a corresponding channel quality to the BS;

the feedback information receiving module of the BS is further configured to receive the local optimal CDD delay values in the precoding codebook together with the corresponding channel quality from the UE, and

the probability analysis module of the BS is further configured to perform probability analysis on the channel quality corresponding to the local optimal CDD delay values for each UE, select Nt CDD delay values corresponding to the channel quality with the highest probability as an overall CDD delay value in the precoding codebook and sending that to the CDD precoding codebook module for updating the CDD delay values in the precoding codebook.

10. The system as defined in claim 8, wherein
the BS further includes an update-start signal transmitting module for sending a start signal of updating the CDD delay value to the UE;
the UE further includes an update-start signal receiving module for receiving a start signal of updating the CDD delay value from the BS, and starting the local optimal CDD delay value acquiring module.

11. The system as defined in claim 8, wherein
the UE further includes a timing module for periodically generating and sending a start signal of updating the CDD delay value to the local optimal CDD delay value acquiring module.

12. A base station (BS), including a CDD precoding codebook module for storing codebooks and further comprising
a feedback information receiving module for receiving the local optimal CDD delay values in the precoding codebook from the UE, and
a probability analysis module for performing probability analysis on the local optimal CDD delay values for each UE, selecting Nt CDD delay values with highest probability as an overall CDD delay value in the precoding codebook and sending that to the CDD precoding codebook module for updating the CDD delay values in the precoding codebook.

13. The BS as defined in claim 12, wherein
the feedback information receiving module is further configured to receive the local optimal CDD delay values in the precoding codebook with the corresponding channel quality;
the probability analysis module is further configured to perform a probability contribution analysis on the channel quality corresponding to the local optimal CDD delay value for each UE and select Nt CDD delay values corresponding to channel quality with the highest probability as an overall CDD delay value, and then send that to the CDD precoding codebook module to update the CDD delay values in the precoding codebook.

14. The BS as defined in claim 12, further comprising
an update-start signal transmitting module for sending a start signal of updating the CDD delay value to the UE.

15. A user equipment (UE), including a baseband demodulation module having a channel estimation sub-module, and further comprising
a local optimal CDD delay value acquiring module for acquiring the local optimal CDD delay value for obtaining the best channel quality on each sub-band respectively, based on the channel estimation result from the channel estimation sub-module, and sending the local optimal CDD delay value to the BS.

16. The UE as defined in claim 15, wherein
the local optimal CDD delay value acquiring module is further configured to acquire the local optimal CDD delay value for obtaining the best channel quality on each sub-band respectively, based on the channel estimation result from the channel estimation sub-module, and send the local optimal CDD delay value together with a corresponding channel quality to the BS.

17. The UE as defined in claim 15, further including
an update-start signal receiving module for receiving start signal of updating the CDD delay value from the BS, and starting the local optimal CDD delay value acquiring module.

18. The UE as defined in claim 15, further including
a timing module for periodically generating and sending a start signal of updating the CDD delay value to the local optimal CDD delay value acquiring module.

**19.** A method for determining Cyclic Delay Diversity (CDD) delay value, applied in a CDD precoding system which includes a Base Station (BS) and a plurality of User Equipments (UEs), the method comprising

Step B1, determining channel feature based on a result of channel estimation and feeding the resulting channel feature information back to the BS by the UE;

Step B2, selecting an overall CDD delay value in the precoding codebook based on the channel feature information received from each UE by the BS;

Step B3, updating the CDD delay values in the precoding codebook based on the overall CDD delay value in the precoding codebook by the BS.

**20.** The method as defined in claim 19, further comprising

prior to step B1, sending a start signal by the BS to the UE to start the update process of the CDD delay values in the precoding codebook, or automatically starting the update process of the CDD delay values in the precoding codebook by the UE periodically.

**21.** The method as defined in claim 19, wherein the step B2 further includes

receiving the channel feature information from each UE and performing probability analysis on the channel feature information by the BS;

selecting Nt CDD delay values matched with the channel feature having the highest probability as the overall CDD delay values in the precoding codebook by the BS.

**22.** The method as defined in claim 19, wherein the step B2 further comprises

receiving the channel feature information from each UE and performing probability analysis on the CDD delay values matched with the channel feature information by the BS;

selecting Nt CDD delay values having the highest probability as the overall CDD delay values in the precoding codebook by the BS.

**23.** The method as defined in claim 21 or 22, wherein

the channel feature information includes at least one from a group of LOS (Line of Sight) /NLOS (Non-Line of Sight), fast fading / slow fading, and flat fading / frequency-selective fading; and

a rule of said matching includes:

a channel for LOS is suitable to use a larger CDD delay value in the precoding codebook; while a channel for NLOS is suitable to use a smaller CDD delay value in the precoding codebook;

a channel for fast fading is suitable to use a larger CDD delay value in the precoding codebook; while a channel for slow fading is suitable to use a smaller CDD delay value in the precoding codebook;

a channel for flat fading is suitable to use a larger CDD delay value in the precoding codebook; while a channel for frequency-selective fading is suitable to use a smaller CDD delay value in the precoding codebook.

**24.** A system for determining Cyclic Delay Diversity (CDD) delay value, comprising a Base Station (BS) and a plurality of User Equipments (UEs), said BS including a CDD precoding codebook module for storing codebooks, each said UE including a baseband demodulation module having a channel estimation sub-module, wherein

the UE further includes a channel feature determining module for determining the channel feature, based on the channel estimation result from the channel estimation sub-module, and send the resulting channel feature information to the BS; and

the BS further includes a feedback information receiving module for receiving the channel feature information from the UE, and a probability analysis module for performing probability contribution analysis on the channel feature information for each UE, selecting Nt CDD delay values matched with the channel feature having the highest probability as an overall CDD delay value in the precoding codebook and send that to the CDD precoding codebook module to update the CDD delay values in the precoding codebook.

**25.** The system as defined in claim 24, wherein

the probability analysis module of the BS is further configured to perform probability contribution analysis on the CDD delay values matching with the channel feature information for each UE, select Nt CDD delay values having the highest probability as an overall CDD delay value in the precoding codebook and send that to CDD precoding codebook module to update the CDD delay values in the precoding codebook.

**26.** The system as defined in claim 24, wherein
the BS further includes an update-start signal transmitting module for sending a start signal of updating the CDD delay value to the UE;
the UE further includes an update-start signal receiving module for receiving the start signal of updating the CDD delay value from the BS, and starting the channel feature determining module.

**27.** The system as defined in claim 24, wherein
the UE further includes a timing module for periodically generating and sending a start signal of updating the CDD delay value to the channel feature determining module.

**28.** A base station (BS), including a CDD precoding codebook module for storing codebooks and further comprising
a feedback information receiving module for receiving channel feature information from UEs, and
a probability analysis module for performing probability contribution analysis on the channel feature information for each UE, selecting Nt CDD delay values matched with the channel feature having the highest probability as an overall CDD delay value in the precoding codebook and send that to the CDD precoding codebook module to update the CDD delay values in the precoding codebook.

**29.** The BS as defined in claim 28, wherein
the probability analysis module is further configured to perform probability contribution analysis on the CDD delay values matching with the channel feature information for each UE, select Nt CDD delay values having the highest probability as an overall CDD delay value in the precoding codebook and send that to CDD precoding codebook module to update the CDD delay values in the precoding codebook.

**30.** The BS as defined in claim 28, further comprising
an update-start signal transmitting module for sending a start signal of updating the CDD delay value to the UE.

**31.** A user equipment (UE), including a baseband demodulation module having a channel estimation sub-module, and further comprising .
a channel feature determining module for determining the channel feature, based on the channel estimation result from the channel estimation sub-module, and send the resulting channel feature information to the BS.

**32.** The UE as defined in claim 31, further comprising
an update-start signal receiving module for receiving start signal of updating the CDD delay value from the BS, and starting the channel feature determining module.

**33.** The UE as defined in claim 31, further comprising
a timing module for periodically generating and sending a start signal of updating the CDD delay value to the channel feature determining module.

**34.** A method for determining Cyclic Delay Diversity (CDD) delay value, applied in a CDD precoding system which includes a Base Station (BS) and a plurality of User Equipments (UEs), the method comprising
Step C1, obtaining an optimal CDD delay value in the precoding codebook for obtaining the best channel quality on each sub-band respectively based on a result of channel estimation and feeding back to the BS by the UE;
Step C2, selecting an optimal CDD delay value in the precoding codebook for each UE by the BS, based on the local optimal CDD delay values received from each UE;
Step C3, updating the CDD delay values in the precoding codebook based on the selected CDD delay values of the precoding codebook by the BS.

**35.** The method as defined in claim 34, further comprising
prior to step C1, sending a start signal by the BS to the UE to start the update process of the CDD delay values in the precoding codebook, or automatically starting the update process of the CDD delay values in the precoding codebook by the UE periodically.

**36.** The method as defined in claim 34, wherein the step C1 further comprises
performing channel estimation by using pilot information sent from the BS by the UE;
obtaining a CDD delay value in the precoding codebook for obtaining a largest capacity, or a highest data rate, or a smallest error rate on each sub-band based on the result of the channel estimation by the UE;
sending the obtained local optimal CDD delay value to the BS by the UE.

**37.** The method as defined in claim 34, wherein the step of obtaining an optimal CDD delay value in the precoding codebook for obtaining the best channel quality on each sub-band respectively by the UE includes
testingl all possible CDD values in a predefined range of the CDD values on each sub-band to find the optimal CDD delay value in the precoding codebook for obtaining the best channel quality for the UE.

**38.** The method as defined in claim 34, wherein the step of obtaining an optimal CDD delay value in the precoding codebook for obtaining the best channel quality on each sub-band respectively by the UE includes
calculating to obtain the optimal CDD delay value which corresponds to the best channel quality on each sub-band for the UE.

**39.** The method as defined in claim 34, wherein the step C2 further comprises
receiving the local optimal CDD delay values from each UE and performing probability analysis on the local optimal CDD delay values for each UE by the BS;
selecting Nt CDD delay values with the highest probability as the optimal CDD delay values in the precoding codebook for the respective UEs by the BS.

**40.** The method as defined in claim 34, wherein
the step C1 further comprises
obtaining an optimal CDD delay value in the precoding codebook for obtaining the best channel quality on each sub-band respectively based on a result of channel estimation and feeding the optimal CDD delay value together with a corresponding channel quality back to the BS by the UE;
the step C2 further comprises
receiving the local optimal CDD delay value together with the corresponding channel quality from each UE and performing probability analysis on the channel quality corresponding to the optimal CDD delay values by the BS;
selecting Nt CDD delay values corresponding to the channel quality having the highest probability as the optimal CDD delay values in the precoding codebook for the UE by the BS.

**41.** A system for determining Cyclic Delay Diversity (CDD) delay value, comprising a Base Station (BS) and a plurality of User Equipments (UEs), said BS including a CDD precoding codebook module for storing codebooks, each said UE including a baseband demodulation module having a channel estimation sub-module, wherein
the UE further includes a local optimal CDD delay value acquiring module for acquiring the local optimal CDD delay value for obtaining the best channel quality on each sub-band respectively, based on the channel estimation result from the channel estimation sub-module, and sending the local optimal CDD delay value to the BS; and
the BS further includes a feedback information receiving module for receiving the local optimal CDD delay values in the precoding codebook from the UE, and a probability analysis module for performing probability analysis on the local optimal CDD delay values for each UE, selecting Nt CDD delay values with the highest probability as an overall CDD delay value in the precoding codebook and sending that to the CDD precoding codebook module for updating the CDD delay values in the precoding codebook.

**42.** The system as defined in claim 41, wherein
the local optimal CDD delay value acquiring module of the UE is further configured to acquire the local optimal CDD delay value for obtaining the best channel quality on each sub-band respectively, based on the channel estimation result from the channel estimation sub-module, and sending the local optimal CDD delay value together with a corresponding channel quality to the BS;
the feedback information receiving module of the BS is further configured to receive the local optimal CDD delay values of the precoding codebook together with the corresponding channel quality from the UE, and
the probability analysis module of the BS is further configured to perform probability analysis on the channel quality corresponding to the local optimal CDD delay values for each UE, select Nt CDD delay values corresponding to the channel quality having the highest probability as an overall CDD delay value in the precoding codebook for each UE and sending that to the CDD precoding codebook module for updating the CDD delay values in the precoding codebook.

**43.** The system as defined in claim 41, wherein
the BS further includes an update-start signal transmitting module for sending a start signal of updating the CDD delay value to the UE;
the UE further includes an update-start signal receiving module for receiving the start signal of updating the CDD delay value from the BS, and starting the local optimal CDD delay value acquiring module.

**44.** The system as defined in claim 41, wherein
the UE further includes a timing module for periodically generating and sending a start signal of updating the CDD delay value to the local optimal CDD delay value acquiring module.

**45.** A base station (BS), including a CDD precoding codebook module for storing codebooks and further comprising a feedback information receiving module for receiving the local optimal CDD delay values in the precoding codebook from respective UEs, and
a probability analysis module for performing probability analysis on the local optimal CDD delay values for each UE, selecting Nt CDD delay values with the highest probability as optimal CDD delay values in the precoding codebook for the respective UEs and sending that to the CDD precoding codebook module for updating the CDD delay values in the precoding codebook.

**46.** The BS as defined in claim 45, wherein
the feedback information receiving module is further configured to receive the local optimal CDD delay values in the precoding codebook together with a corresponding channel quality;
the probability analysis module is further configured to perform a probability contribution analysis on the channel quality corresponded to the local optimal CDD delay value for each UE and select Nt CDD delay values corresponding to the channel quality with the highest probability as the optimal CDD delay values for the respective UEs, and then send that to the CDD precoding codebook module to update the CDD delay values in the precoding codebook.

**47.** The BS as defined in claim 45, further comprising
an update-start signal transmitting module for sending a start signal of updating the CDD delay value to the UE.

**48.** A method for determining Cyclic Delay Diversity (CDD) delay value, applied in a CDD precoding system which includes a Base Station (BS) and a plurality of User Equipments (UEs), the method comprising
Step D1, determining channel feature based on a result of channel estimation and feeding the resulting channel feature information back to the BS by the UE;
Step D2, selecting optimal CDD delay values in the precoding codebook for each UE by the BS, based on the channel feature information received from each UE;
Step D3, updating the CDD delay values in the precoding codebook based on the selected CDD delay values in the precoding codebook by the BS.

**49.** The method as defined in claim 48, further comprising
prior to step D1, sending a start signal by the BS to the UE to start the update process of the CDD delay values in the precoding codebook, or automatically starting the update process of the CDD delay values in the precoding codebook by the UE periodically.

**50.** The method as defined in claim 48, wherein the step D2 further includes
receiving the channel feature information from each UE and performing probability analysis on the channel feature information by the BS;
selecting Nt CDD delay values matched with the channel feature having the highest probability as optimal CDD delay values in the precoding codebook by the BS.

**51.** The method as defined in claim 48, wherein the step D2 further comprises
receiving the channel feature information from respective UEs and performing probability analysis on the CDD delay values matched with the channel feature information for each UE by the BS;
selecting Nt CDD delay values having the highest probability as the optimal CDD delay values in the precoding codebook for the respective UEs by the BS.

**52.** The method as defined in claim 50 or 51, wherein
the channel feature information includes at least one from a group of LOS (Line of Sight) /NLOS (Non-Line of Sight), fast fading / slow fading, and flat fading / frequency-selective fading; and
a rule of said matching includes:

a channel for LOS is suitable to use a larger CDD delay value in the precoding codebook; while a channel for NLOS is suitable to use a smaller CDD delay value in the precoding codebook;
a channel for fast fading is suitable to use a larger CDD delay value in the precoding codebook; while a channel for slow fading is suitable to use a smaller CDD delay value in the precoding codebook;

a channel for flat fading is suitable to use a larger CDD delay value in the precoding codebook; while a channel for frequency-selective fading is suitable to use a smaller CDD delay value in the precoding codebook.

53. A system for determining Cyclic Delay Diversity (CDD) delay value, comprising a Base Station (BS) and a plurality of User Equipments (UEs), said BS including a CDD precoding codebook module for storing codebooks, each said UE including a baseband demodulation module having a channel estimation sub-module, wherein
the UE further includes a channel feature determining module for determining the channel feature, based on the channel estimation result from the channel estimation sub-module, and send the result channel feature information to the BS; and
the BS further includes a feedback information receiving module for receiving the channel feature information from respective UEs, and a probability analysis module for performing probability contribution analysis on the channel feature information for each UE, selecting Nt CDD delay values matched with the channel feature having the highest probability as optimal CDD delay value in the precoding codebook for each UE and sending that to the CDD precoding codebook module to update the CDD delay values in the precoding codebook.

54. The system as defined in claim 53, wherein
the probability analysis module of the BS is further configured to perform probability contribution analysis on the CDD delay values matching with the channel feature information for each UE, select Nt CDD delay values having the highest probability as optimal CDD delay values in the precoding codebook for each UE and send that to CDD precoding codebook module to update the CDD delay values in the precoding codebook.

55. The system as defined in claim 53, wherein
the BS further includes an update-start signal transmitting module for sending a start signal of updating the CDD delay value to the UE;
the UE further includes an update-start signal receiving module for receiving the start signal of updating the CDD delay value from the BS, and starting the channel feature determining module.

56. The system as defined in claim 53, wherein
the UE further includes a timing module for periodically generating and sending a start signal of updating the CDD delay value to the channel feature determining module.

57. A base station (BS), including a CDD precoding codebook module for storing codebooks and further comprising a feedback information receiving module for receiving the channel feature information from the respective UEs, and a probability analysis module for performing probability contribution analysis on the channel feature information for each UE, selecting Nt CDD delay values matched with the channel feature having the highest probability as optimal CDD delay values in the precoding codebook and sending that to CDD precoding codebook module to update the CDD delay values in the precoding codebook.

58. The BS as defined in claim 57, wherein
the probability analysis module is further configured to perform probability contribution analysis on the CDD delay values matching with the channel feature information for each UE, select Nt CDD delay values having the highest probability as optimal CDD delay values in the precoding codebook and send that to CDD precoding codebook module to update the CDD delay values in the precoding codebook.

59. The BS as defined in claim 57, further comprising
an update-start signal transmitting module for sending a start signal of updating the CDD delay value to the respective UEs.

60. A method for determining Cyclic Delay Diversity (CDD) delay value, applied in a CDD precoding system which includes a Base Station (BS) and a plurality of User Equipments (UEs), the method comprising
Step E1, counting cell performance statistically and periodically by the BS;
Step E2, recording the cell performance and corresponding CDD delay values by the BS during each counting period;
Step E3, determining whether the cell performance declines or not by the BS, based on the recorded cell performance during several periods, and updating the CDD delay values in the precoding codebook if it is determined the cell performance declines.

61. The method as defined in claim 60, wherein
the cell performance includes at least one from a group including an average throughput, an average error rate, an average delay, and a boundary user throughput.

**62.** The method as defined in claim 60, wherein
updating the CDD delay values in step E3 includes using the unused CDD delay values based on the recorded information and updating the CDD delay values.

**63.** The method as defined in claim 60, wherein
updating the CDD delay values in step E3 includes using the CDD delay values with higher performance in the past time and updating the CDD delay values.

**64.** A base station (BS), including a CDD precoding codebook module for storing codebooks and further including a CDD delay value updating module, a statistical result storing module, and a cell performance counting module, wherein
the cell performance counting module counts periodically and stores the cell performance with the corresponding CDD delay values into the statistical result storing module, and
the CDD delay value updating module updates the CDD delay values in the precoding codebook by using the result stored in the statistical result storing module.

**65.** The BS as defined in claim 64, wherein
the CDD delay value updating module is further configured to select the unused CDD delay values based on the recorded information to update the CDD delay values.

**66.** The BS as defined in claim 64, wherein
the CDD delay value updating module is further configured to select the CDD delay values with higher performance in the past time based on the recorded information to update the CDD delay values.

**67.** A method for determining Cyclic Delay Diversity (CDD) delay value, applied in a CDD precoding system which includes a Base Station (BS) and a plurality of User Equipments (UEs), the method comprising
Step F1, counting UE performance statistically and periodically by the BS;
Step F2, recording the UE performance and corresponding CDD delay values by the BS during each counting period;
Step F3, determining whether the UE performance declines or not by the BS, based on the recorded UE performance during several periods, and updating the CDD delay values in the precoding codebook if it is determined the UE performance declines.

**68.** The method as defined in claim 67, wherein
the UE performance includes at least one from a group including an average throughput, an average error rate, and an average delay.

**69.** The method as defined in claim 67, wherein
updating the CDD delay values in step F3 includes using the unused CDD delay values based on the recorded information and updating the CDD delay values.

**70.** The method as defined in claim 67, wherein
updating the CDD delay values in step F3 includes using the CDD delay values with higher performance in the past time and updating the CDD delay values.

**71.** A base station (BS), including a CDD precoding codebook module for storing codebooks and further including a CDD delay value updating module, a statistical result storing module, and a UE performance counting module, wherein
the UE performance counting module counts the UE performance periodically and stores the UE performance with the corresponding CDD delay values into the statistical result storing module, and
the CDD delay value updating module updates the CDD delay values in the precoding codebook by using the result stored in the statistical result storing module.

**72.** The BS as defined in claim 71, wherein
the CDD delay value updating module is further configured to select the unused CDD delay values based on the recorded information to update the CDD delay values.

**73.** The BS as defined in claim 71, wherein
the CDD delay value updating module is further configured to select the CDD delay values with higher performance in the past time based on the recorded information to update the CDD delay values.

**Fig. 1**

201

BS starts the update process of the CDD delay values in the precoding codebook, or UE automatically starts the update process of the CDD delay values in the precoding codebook periodically

202

UE obtains an optimal CDD delay value in the precoding codebook for obtaining the best channel quality on each sub-band respectively based on a result of channel estimation and feeds back to the BS

203

BS selects an overall CDD delay value in the precoding codebook based on the local optimal CDD delay values received from each UE

204

BS updates the CDD delay values in the precoding codebook based on the overall CDD delay values in the precoding codebook and notifies UE

205

System operates normally under the updated CDD delay values in the precoding codebook

**Fig. 2**

Fig. 3

**Fig. 4**

501

BS starts the update process of the CDD delay values in the precoding codebook, or UE automatically starts the update process of the CDD delay values in the precoding codebook periodically

502

UE determines the channel characters based on channel estimation result and feeds back to the BS

503

BS selects an overall CDD delay value in the precoding codebook based on the channel character information received from each UE

504

BS updates the CDD delay values in the precoding codebook based on the overall CDD delay values in the precoding codebook and notifies UE

505

System operates normally under the updated CDD delay values in the precoding codebook

**Fig. 5**

Fig. 6

Fig. 7

801

BS starts the update process of the CDD delay values
in the precoding codebook, or UE automatically starts
the update process of the CDD delay values in the
precoding codebook periodically

802

UE obtains an optimal CDD delay value in the
precoding codebook for obtaining the best channel
quality on each sub-band respectively based on a result
of channel estimation and feeds back to the BS

803

BS selects optimal CDD delay values of the precoding
codebook for each UE based on the local optimal CDD
delay values received from each UE

804

BS updates the CDD delay values in the precoding
codebook based on the selected CDD delay values in
the precoding codebook and notifies UE

805

System operates normally under the updated CDD
delay values in the precoding codebook

**Fig. 8**

901

BS starts the update process of the CDD delay values in the precoding codebook, or UE automatically starts the update process of the CDD delay values in the precoding codebook periodically

902

UE determines the channel characters based on channel estimation result and feeds back to the BS

903

BS selects optimal CDD delay value in the precoding codebook for each UE based on the channel character information received from each UE

904

BS updates the CDD delay values in the precoding codebook based on the selected CDD delay values in the precoding codebook and notifies UE

905

System operates normally under the updated CDD delay values in the precoding codebook

**Fig. 9**

1001

```
┌─────────────────────────────┐
│   BS counts cell performance │
│   statistically and periodically │
└─────────────────────────────┘
```

1002

```
┌─────────────────────────────┐
│   BS records the cell performance │
│   and corresponding CDD delay │
│            values            │
└─────────────────────────────┘
```

1003

```
        BS determines whether the cell
        performance declines based on
        the recorded cell performance
            during several periods
```

0                                              0

1004                                           1005

```
┌─────────────────────────────┐    ┌─────────────────────────────┐
│ BS updates the CDD delay values in │    │ Keep the CDD delay values in the │
│     the precoding codebook     │    │  precoding codebook unchanged  │
└─────────────────────────────┘    └─────────────────────────────┘
```

1006

```
┌──────────────────────────────────────────────────────────┐
│          Normal signaling and data transmission           │
└──────────────────────────────────────────────────────────┘
```

**Fig. 10**

EP 1 919 115 A2

Fig. 11

40

```
                                          ┌──────────────────────────┐  1201
                                          │   BS counts UE performance │
                                          │   statistically and periodically │
                                          └──────────────────────────┘
                                                      │
                                                      ▼                 1202
                                          ┌──────────────────────────┐
                                          │  BS records the UE performance and │
                                          │  corresponding CDD delay values │
                                          └──────────────────────────┘
                                                      │
                                                      ▼            1203
                                            ╱ BS determines whether the UE ╲
                                           ╱  performance declines based on ╲
                                           ╲  the recorded UE performance  ╱
                                            ╲  during several periods      ╱
                          ▌                              ▌
                          ▼  1204                        ▼  1205
          ┌──────────────────────────┐    ┌──────────────────────────┐
          │ BS updates the CDD delay values in │  │ Keep the CDD delay values in the │
          │    the precoding codebook │    │   precoding codebook unchanged │
          └──────────────────────────┘    └──────────────────────────┘
                          │                              │
                          ▼                              ▼   1206
          ┌─────────────────────────────────────────────────────────┐
          │           Normal signaling and data transmission          │
          └─────────────────────────────────────────────────────────┘
```

**Fig. 12**

BS

Data streams from different UEs

$N_{UE}$

Scheduling module

$N_{RB}$

RB#$N_{RB}$

RB#1

Demultiple-xing module

Nt

Precoding module

serial-to-parallel conversion module

IFFT Module

cyclic prefix inserting module

transmitting antenna 1

transmitting antenna Nt

CDD precoding codebook module

CDD delay value updating module

statistical result storing module

UE performance counting module

**Fig. 13**